# EUROPEAN PATENT APPLICATION

(11) **EP 2 271 004 A2**
(43) Date of publication of application: **05.01.2011**
(21) Application number: 10168482.7
(22) Date of filing: 05.07.2010
(51) Int. Cl.: H04B 7/26

(54) **Wireless communication frame structure and apparatus**

(30) Priority: 03.07.2009 US 497604
(71) Applicant: Nortel Networks Limited, St. Laurent, QC H4S 2A9 (CA)
(72) Inventor: Fong, Mo-Han, Ottawa Ontario K1S 3J7 (CA); Ma, Jianglei, Ottawa Ontario K2M 2W5 (CA); Vrzic, Sophie, Nepean Ontario K2G 6C2 (CA); Au, Kelvin Kar-Kin, Ottawa Ontario K2C 3M5 (CA); Novak, Robert, Ottawa Ontario K2A 1Z1 (CA); Yuan, Jun, Kanata Ontario K2T 1C7 (CA); Yu, Dong-Sheng, Ottawa Ontario K2G 5Y6 (CA); Zhang, Hang, Nepean Ontario K2G 5Z1 (CA); Senerath, Nimal, Nepean Ontario K2G 6P5 (CA); Zhu, Peiying, Kanata Ontario K2M 2L4 (CA); Tong, Wen, Ottawa Ontario K2C 4A7 (CA)
(74) Representative: Bird, William Edward

(57) **Abstract**

A method comprises providing a frame, the frame including a downlink sub-frame and an uplink sub-frame, portions of the downlink sub-frame and uplink sub-frame being allocated for communication with a mobile station configured to operate utilizing a legacy IEEE 802.16 standard, and portions of the downlink sub-frame and uplink sub-frame being allocated for communication with a mobile station configured to operate utilizing the IEEE 802.16m standard; and using the frame to wirelessly communicate with a mobile station in at least one of the uplink and downlink directions. A method of using an 802.16m frame structure for multi-band operation is also provided, as well as an 802.16m frame structure for relay support.

## Description

### Field of the Invention

The present invention relates to wireless communication systems.

### Background

The Worldwide Interoperability for Microwave Access Forum (WiMAX) has developed a specification that describes a radio interface for wireless data communications. This specification is known as the Institute of Electrical and Electronic Engineers (IEEE) 802.16e-2005 standard (referred to herein as the "IEEE 802.16e standard") and is incorporated herein by reference. WiMAX is intended to provide higher capacity, allow greater communications distances and provide mobility (access across different access points).

The Institute of Electrical and Electronics Engineers, Inc. (IEEE) 802.16 Broadband Wireless Access Working Group Task Group m (TGm) is chartered to develop an amendment to IEEE Standard 802.16, to be known as IEEE 802.16m: P802.16 - IEEE Standard for Local and Metropolitan Area Networks - Part 16: Air Interface for Fixed Broadband Wireless Access Systems - Amendment: IEEE Standard for Local and Metropolitan Area Networks - Part 16: Air Interface for Fixed and Mobile Broadband Wireless Access Systems - Advanced Air Interface. The documents related to the IEEE 802.16m standard are available at nttp://www.ieee802.org/16/tgm/. These can be considered at any date by utilizing the services of the Internet Web Archive, available at nttp://www.arcnive.org/. For example, the following URL provides access to a copy of the IEEE 802.16m documents as they appeared on December 10th 2007, the filing date of the application: http://web.archive.org/web/20071210/ieee802.org/16/tgm/, of which this application is a Continuation in Part.

All documents, whether listed as contributed or official, listed in http://web.archive.org/web/20071210/ieee802.org/16/tgm/ are incorporated herein by reference in their entirety.

Of particular relevance to the background of this application are those documents contributed to the above noted IEEE 802.16m working group by the inventors named herein.

### Summary of the Invention

In some embodiments, the concepts of the present invention may be used in conjunction with the IEEE 802.16 standard, which is commonly referred to as the WiMAX standard, and in particular the next generation of the IEEE 802.16 standard commonly known as the IEEE 802.16m standard.

Some embodiments described herein employ time division duplexing (TDD), and some embodiments employ frequency division duplexing (FDD).

According to a first aspect, there is provided multiple types of systems or OFDMA transmission formats that can be multiplexed in time division fashion or frequency division fashion or both. Each frequency division segment can further be time division multiplexed across multiple systems. The same superframe format, frame format and smaller frame format can be applied to time division multiplexing, frequency division multiplexing and a mixture of both. The same synchronization channels and system parameters of the broadcast channel can be applied to time division multiplexing, frequency division multiplexing and a mixture of both. This aspect can be applied to a single hop system consisting of a base station and a mobile station, and multi-hop systems consisting of a base station, relay stations (or intermediate nodes) and mobile stations. This aspect can be applied to the transmission and multiplexing of multiple systems across each hop of a multi-hop network.

According to a second aspect there is provided a transmission frame consisting of time division multiplexing (TDM) and/or frequency division multiplexing (FDM) of two or more systems or waveforms onto the same Radio Frequency (RF) carrier and bandwidth. A transmission frame consists of multiple equal-size smaller frames, where each smaller frame constitutes the basic unit of time-frequency resource definition, time-division duplex (TDD) partitioning between downlink and uplink, and time division multiplexing (TDM) between two or more OFDMA systems or formats. The start of the TDD downlink portion or uplink portion within a frame can be different for different systems that are multiplexed onto the same RF carrier and bandwidth. A superframe consists of multiple equal-size frames, where each frame is further divided into multiple equal-size smaller frames. The superframe boundary and duration can be different for different systems that are multiplexed onto the same RF carrier and bandwidth in TDM or FDM fashion. A transmission frame or superframe consists of a universal synchronization channel such as a universal preamble shared by multiple types of systems and system-specific synchronization channels or system-specific preambles used by the corresponding system. The system-specific synchronization channel occurs at a fixed location within the superframe of the corresponding system. The universal synchronization channel and system-specific synchronization channel puncture out one or more symbols of one or more designated smaller frames within a frame or superframe. A superframe consists of one or more system parameter broadcast channels at predefined locations within the superframe. The system parameter broadcast channels are superposed onto the same time-frequency resource within the superframe. The Hybrid ARQ (HARQ) acknowledgement (ACK) and retransmission timing of a system within a frame or superframe are defined by the ACK delay, retransmission delay, the number of parallel HARQ channels, the TDD Downlink (DL) to Uplink (UL) ratio and the TDM resource allocated to the system. This information is signaled by the base station in broadcast or unicast fashion to the mobile station and the mobile station deduces the HARQ ACK timing and retransmission timing based on this information.

According to a third aspect, there is provided a superframe consisting of multiple equal-size frames, where each frame can be further divided into multiple equal-size smaller frames. A preamble frame or smaller frame is located in a predefined location within the superframe and defines the superframe boundary. A preamble frame or smaller frame consists of a common-synchronization channel and the cell-specific synchronization channel. The common-synchronization channel is scrambled by unique sequences to indicate the types of systems multiplexed onto the same RF carrier and bandwidth as that of the preamble frame or smaller frame.

According to a fourth aspect, there is provided a system bandwidth divided into multiple segments with the same or different bandwidth. Each segment supports one or multiple systems or OFDMA transmission formats. A system, transmission format or time-frequency resource definition can span one or more segments. A base station can simultaneously support different types of systems or OFDMA transmission formats on different segments. The base station can transmit/receive in single carrier fashion, that is one center frequency and one Fast Fourier Transform (FFT) across multiple segments or in multi-carrier fashion, that is multiple center frequencies and FFTs across multiple segments. A mobile station can transmit/receive in single carrier fashion, that is one center frequency and one FFT across multiple segments or in multi-carrier fashion, that is multiple center frequencies and FFTs across multiple segments. A mobile station can transmit/receive on one or multiple segments using different center frequencies and FFT sizes from those of the base station. A mobile station performs synchronization and network entry on one or more specific segments implicitly indicated by the base station through the presence of preamble in that segment or explicitly indicated by the base station through system parameter broadcast signaling. A mobile station can be semi-statically or dynamically allocated to one or multiple segments after network entry. Guard bands or tones between segments can be semi-statically or dynamically included or excluded. One or more segments contain the universal synchronization channels and system parameter broadcast channels shared by multiple systems. Additional system-specific synchronization channels and system parameter broadcast channels can be located in the same or different sets of segments. The universal synchronization channels and system parameter broadcast channels can be located on the center frequency of the entire band, with predefined bandwidths.

According to a fifth aspect, there is provided a node which transmits signals to its parent node and child node at the same time on the same RF carrier. A node receives signals from its parent node and child node at the same time on the same RF carrier. A node transmits a signal to its parent node and child node at the same time on the same RF carrier on global time-frequency resource zones. A node receives signals from its parent node and child node at the same time on the same RF carrier on global time-frequency resource zones. A set of orthogonal time-frequency sub-channels is defined in a global time-frequency resource zone. The set of sub-channels is shared by the transmission to parent node and child node or reception from parent node and child node. The global time-frequency resource zones may be configured within the DL sub-frame and/or UL sub-frame so that different Mobile Stations (MSs) may not use the same global zone for DL and UL transmissions, which can lead to interference issues. On a global time-frequency zone, either odd-hop or even-hop access nodes may use the zone for transmission to (or reception from) an MS. Two global time/frequency resource zones, one configured for odd-hop RS-to-MS communication and one configured for even-hop RS-to-MS communications may be configured for the DL sub-frame. Similarly, two global zones may be configured for the uplink sub-frame. A node simultaneously receives from (or transmits to) its parent node and child node using the same time-frequency resource. Data can be recovered using interference avoidance or interference removal. Global time-frequency resource zones are defined for signaling exchange between multiple nodes (BS, and/or RS, and/or MS) for self-configuration and self-organization operation.

Embodiments may include a modified frame structure to a wireless standard, which can be an OFDMA standard, e.g. a modified frame structure to the IEEE 802.16 standard thereby enabling backwards compatibility (also known as legacy support) for legacy systems (e.g. a deployed system such as that based on the IEEE 802.16e standard). In some embodiments, this modified frame structure may be used in conjunction with the IEEE 802.16m standard.

According to a sixth aspect, there is provided a method comprising providing a frame, the frame including a downlink sub-frame and an uplink sub-frame, portions of the downlink sub-frame and uplink sub-frame being allocated for communication with a mobile station configured to operate utilizing a legacy wireless standard such as a legacy OFDMA standard, e.g. a legacy IEEE 802.16 standard, and portions of the downlink sub-frame and uplink sub-frame being allocated for communication with a mobile station configured to operate utilizing a modified version of that standard, e.g. the IEEE 802.16m standard; and using the frame to wirelessly communicate with a mobile station in at least one of the uplink and downlink directions.

According to a seventh aspect, there is provided a method of operating a wireless communications network having multiple mobile stations and a serving base station, the multiple mobile stations including a first mobile station and a second mobile station, the method comprising dividing system bandwidth into a plurality of bandwidth segments, one for each mobile station; and the bandwidth segment associated with the first mobile station being configured to operate utilizing a wireless standard such as an OFDM standard e.g. the IEEE 802.16m standard.

### Brief Description of the Drawings

The invention will now be described in greater detail with reference to the accompanying diagrams, in which:
Figure 1 is a block diagram of a representative frame structure used in connection with some embodiments;
Figure 2 is a block diagram of a representative sub-frame structure used in connection with some embodiments;
Figure 3A is a block diagram showing a representative frame structure where a legacy system and an IEEE 802.16m system share a common UL to DL switch time but have a different DL to UL switch time;
Figure 3B is a block diagram showing a representative frame structure where a legacy system and an IEEE 802.16m system share a common DL to UL switch time but have a different UL to DL switch time;
Figure 4A is a block diagram illustrating DL Hybrid Automatic Repeat Request (HARQ) round trip delay, with an IEEE 802.16m TDD ratio of 2:3;
Figure 4B is a block diagram illustrating DL HARQ round trip delay, with an IEEE 802.16m TDD ratio of 3:2;
Figure 5A is a block diagram illustrating UL HARQ round trip delay, with an IEEE 802.16m TDD ratio of 2:3;
Figure 5B is a block diagram illustrating UL HARQ round trip delay, with an IEEE 802.16m TDD ratio of 3:2;
Figure 6 is a block diagram of a representative superframe structure used in connection with some embodiments;
Figure 7 is a block diagram of a representative alternative superframe structure used in connection with some embodiments;
Figure 8A is a flowchart of exemplary steps for initial system access for an IEEE 802.16m Mobile Station (MS) according to one embodiment;
Figure 8B is a flowchart of exemplary steps for initial system access for an IEEE 802.16m Mobile Station (MS) according to another embodiment;
Figure 9 is a block diagram of a representative frame structure where a superframe consists of K frames according to one embodiment;
Figure 10 is a block diagram of a representative frame structure where a superframe consists of P mini-slots according to one embodiment;
Figure 11A is a block diagram of a first example multi-band scenario where the available IEEE 802.16m system bandwidth of 20 MHz 1200 is partitioned into multiple segments;
Figure 11B is a block diagram showing a representative frame structure of the multi-band scenario illustrated in Figure 11A;
Figure 11C is a flowchart showing the steps for initial access for an IEEE 802.16m-enabled MS using the multi-band scenario of Figures 11A and 11B;
Figure 12A is a block diagram showing a second example multi-band scenario where the available IEEE 802.16m system bandwidth is partitioned into multiple segments;
Figure 12B is a block diagram showing a representative frame structure of the multi-band scenario illustrated in Figure 12A;
Figure 12C is a flowchart showing the steps for initial access for an IEEE 802.16m-enabled MS using the multi-band scenario of Figures 12A and 12B;
Figure 13A is a block diagram showing a third example multi-band scenario where the available IEEE 802.16m system bandwidth is partitioned into multiple segments;
Figure 13B is a block diagram showing a representative frame structure of the multi-band scenario illustrated in Figure 13A showing a first option of where the preamble mini-slot could be located;
Figure 13C is a block diagram showing a representative frame structure of the multi-band scenario illustrated in Figure 13A showing a second option of where the preamble mini-slot could be located;
Figure 13D is a flowchart showing the steps for initial access for an IEEE 802.16m-enabled MS using the multi-band scenario of Figure 13B;
Figure 13E is a flowchart showing the steps for initial access for an IEEE 802.16m-enabled MS using the multi-band scenario of Figure 13C;
Figure 14A is a block diagram showing a fourth example multi-band scenario where the available IEEE 802.16m system bandwidth is partitioned into multiple segments;
Figure 14B is a block diagram showing a representative frame structure of the multi-band scenario illustrated in Figure 14A showing a first option of where the preamble mini-slot could be located;
Figure 14C is a block diagram showing a representative frame structure of the multi-band scenario illustrated in Figure 14A showing a second option of where the preamble mini-slot could be located;
Figure 14D is a flowchart showing steps for initial access for an IEEE 802.16m-enabled MS using the multi-band scenario of Figure 14B;
Figure 14E is a flowchart showing the steps for initial access for an IEEE 802.16m-enabled MS using the multi-band scenario of Figure 14C.
Figure 15 is a block diagram showing a first example of a frame structure to accomplish multi-hop relay, for TDD, provided in accordance with one embodiment;
Figure 16A is a block diagram of a representative wireless communication network illustrating a second embodiment in TDD supporting multi-hop relay;
Figure 16B is a block diagram illustrating DL and UL sub-frames for the second example shown in Figure 16A;
Figure 17 is a block diagram showing further details of the second embodiment for multi-hop relay;
Figure 18 is a block diagram showing further details of a third embodiment for multi-hop relay, but for FDD;
Figure 19 is a block diagram showing further details of a fourth embodiment for multi-hop relay, also for FDD; and
Figure 20 is a block diagram showing further details of a fifth embodiment for multi-hop relay, also for FDD.

### Detailed Description of the Preferred Embodiments

Although the concepts of the present invention may be used in various communication systems, in some embodiments these concepts can be particularly applicable to the IEEE 802.16 standard, which is commonly referred to as the WiMAX standard, and in particular the next generation of the IEEE 802.16 standard commonly known as the IEEE 802.16m standard.

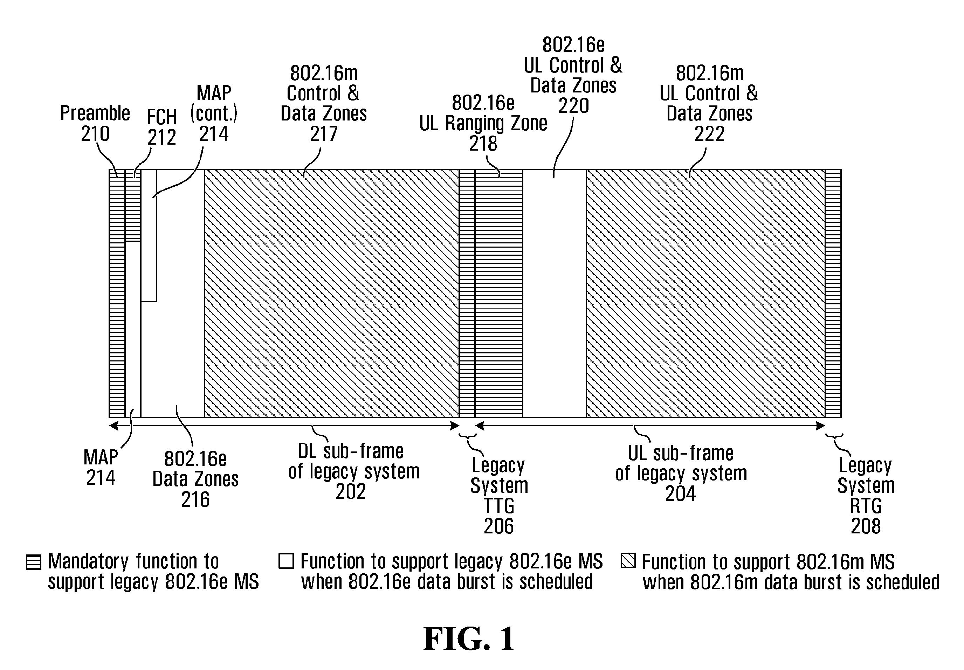

Figure 1 shows a frame structure which provides legacy support, provided in accordance with one embodiment. The frame structure is segmented to provide a first set of zones specifically for legacy support, and a second set of zones designed for communication only with terminals operating under a new standard such as the IEEE 802.16m standard. The frame structure illustrated in Figure 1 is intended only as a representative example of one frame structure which could be used to provide legacy support to terminals operating under the IEEE 802.16e standard. Persons skilled in the art will appreciate that alternative frame structures could be employed to serve the same purpose.

Embodiments of the present invention support both Time Division Duplexing (TDD) and Frequency Division Duplexing (FDD) modes. Figure 1 shows a representative frame structure for the case of TDD downlink and uplink transmission. For the case of FDD of downlink and uplink transmission, the downlink (DL) sub-frame 202 and uplink (UL) sub-frame 204 are on separate carrier frequencies rather than at separate time. The following description of DL sub-frame 202 and UL sub-frame 204 also apply to an FDD system.

Operationally, the frame structure of Figure 1 supports both IEEE 802.16m and legacy systems by defining a legacy zone and an IEEE 802.16m zone whereby legacy zones are located at the beginning of the legacy DL sub-frame and the legacy UL sub-frame. The duration of the legacy zone and the IEEE 802.16m zone can be semi-statically or dynamically configured.

In Figure 1, a DL sub-frame 202 is shown, contiguous with a UL sub-frame 204. The length of each sub-frame is designed to be compatible with legacy systems. DL sub-frame 202 is separated from UL sub-frame 204 by a Transmit Transition Gap (TTG) 206, which is a buffer period between transmission and reception of frames which prevents downlink and uplink collisions. UL sub-frame 204 terminates with a Receive Transition Gap (RTG) 208 which performs a similar function as TTG 206.

DL sub-frame 202 is comprised of downlink preamble 210, frame control header (FCH) 212, which provides frame configuration information, MAP message 214, legacy (i.e. 802.16e) data zone 216, and IEEE 802.16m control and data zones 217.

UL sub-frame 204 is comprised of 802.16e UL ranging zone 218, 802.16e UL control and data zones 220, and IEEE 802.16m UL control and data zones 222.

Preamble 210, FCH 212, TTG 206, RTG 208 and 802.16e UL ranging zone 218 are mandatory functions to support legacy MSs.

MAP message 214, 802.16e data zones 216, and 802.16e UL control and data zones 220 are functions to support legacy 802.16e MSs when 802.16e data bursts are scheduled.

IEEE 802.16m control and data zones 222 are functions to support IEEE 802.16m-enabled MSs when an IEEE 802.16m data burst is scheduled.

Different TDD ratios can be configured for a legacy system and an IEEE 802.16m system. The DL/UL switch of legacy systems is broadcast in the Downlink Channel Descriptor/Uplink Channel Descriptor (DCD/UCD) and is synchronized across the network. In some embodiments, it should be almost statically configured. For IEEE 802.16m, the DL/UL switch should also be statically configured. IEEE 802.16m and legacy systems can have different TDD DL/UL switch times.

Legacy system preamble 210 can be used by legacy terminals and IEEE 802.16m terminals for synchronization and system access. An additional IEEE 802.16m preamble (not shown), such as the common-synchronization channel, can be added to enhance the synchronization performance of IEEE 802.16m terminals.

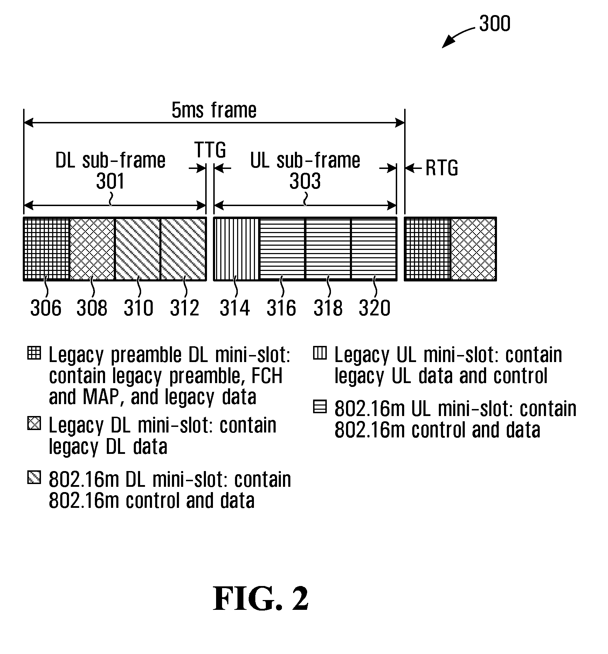

Figure 2 is a block diagram of a representative sub-frame structure 300 used in connection with some embodiments. Figure 2 shows the case of time division duplexing (TDD) of downlink and uplink transmissions. For the case of FDD of downlink and uplink transmissions, the downlink and uplink sub-frames shown in Figure 2 are on separate carrier frequencies rather than separate time. The following description applies equally well to the DL and UL of an FDD system respectively.

In some embodiments, a legacy frame 300 of 5 ms duration is comprised of eight mini-slots 306, 308, 310, 312, 314, 316, 318, 320 (also known as sub-frames). Mini-slots 306, 308, 310 and 312 comprise the DL sub-frame 301, while sub-frames 314, 316, 318 and 320 comprise the UL sub-frame 303. Each mini-slot contains six symbols, though this number can vary.

In some embodiments, the first mini-slot (in this case mini-slot 306) is the preamble mini-slot. For the case of TDD, one symbol is punctured for use as TDD guard time, that is, TTG/RTG. The remaining 5 symbols consist of preamble, FCH and MAP and possibly legacy data zones.

In some embodiments, the DL mini-slots start with the preamble mini-slots, and the UL mini-slots start with the legacy UL mini-slot.

The IEEE 802.16m mini-slots 310, 312, 316, 318 and 320 contain both IEEE 802.16m control and data. The channelization, that is mapping of a logical channel to physical tones, for control and data is defined within each mini-slot.

In some embodiments, an extended mini-slot can be defined by concatenating multiple adjacent or non-adjacent mini-slots. In the DL, the channelization is defined across the mini-slots within the extended mini-slot to improve time diversity for control and data. In the UL, the time is defined within a mini-slot. However, an MS can be assigned resources across the mini-slots within the extended mini-slot, to improve UL coverage.

In both DL and UL, the extended basic resource unit (also called basic channel unit) within the extended mini-slot is defined by concatenation of B basic resource units, one from each mini-slot within the extended mini-slot; where B is the number of mini-slots within an extended mini-slot. The purpose of the extended basic channel unit is to allow scalability of resource size based on the number of mini-slots in the extended mini-slot and to allow the same control channel structure for mini-slots and extended mini-slots.

The extended mini-slots and normal mini-slots can coexist in the system in frequency division multiplexing (FDM) and/or time division multiplexing (TDM) fashion. Separate sets of OFDMA time/frequency resources are allocated to mini-slots and extended mini-slots. The channelization for control and data is defined within each set of OFDMA time/frequency resources.

IEEE 802.16m TDD ratios are defined as M:N where M is the number of IEEE 802.16m DL mini-slots in a frame and N is the number of IEEE 802.16m UL mini-slots in a frame. In the example of Figure 2, the TDD ratio is 2:3.

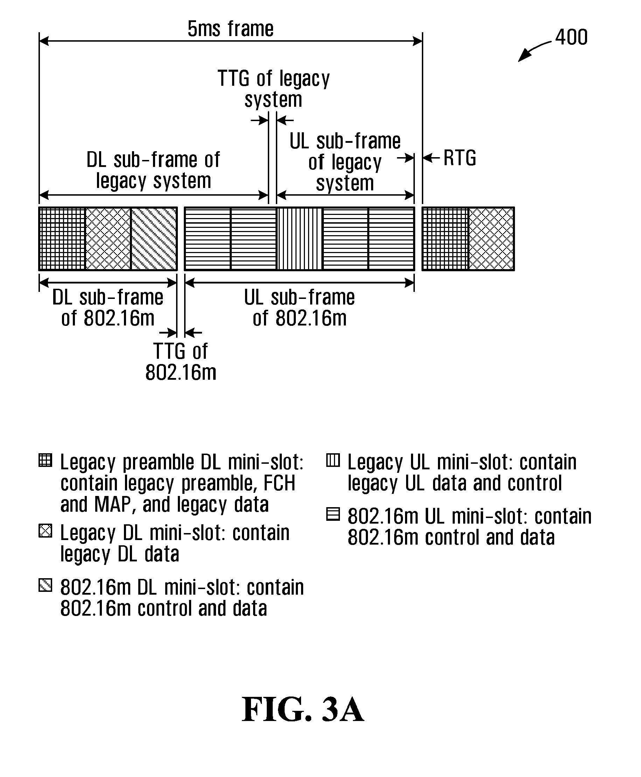

Figure 3A is a block diagram showing a frame 400 where a legacy system and an IEEE 802.16m system share a common UL to DL switch time, but have a different DL to UL switch time. This case has some value where a legacy system profile doesn't support UL with more than a certain number of symbols, e.g. 21.

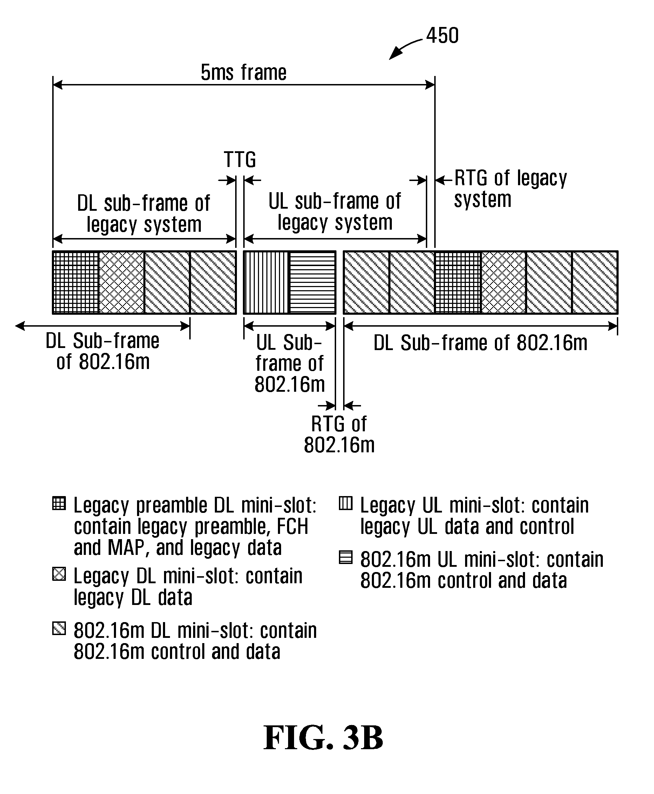

Figure 3B is a block diagram showing a representative frame structure 450 where a legacy system and an IEEE 802.16m system share a common DL to UL switch time but have a different UL to DL switch time. This case has some value where a high DL:UL ratio is desired and where there is a desire to ensure the legacy system has lower latency in UL feedback/requests.

Note that in some embodiments, the gap between an UL and DL sub-frame is always adjacent to a legacy mini-slot so that legacy users only need to search the first mini-slot for information.

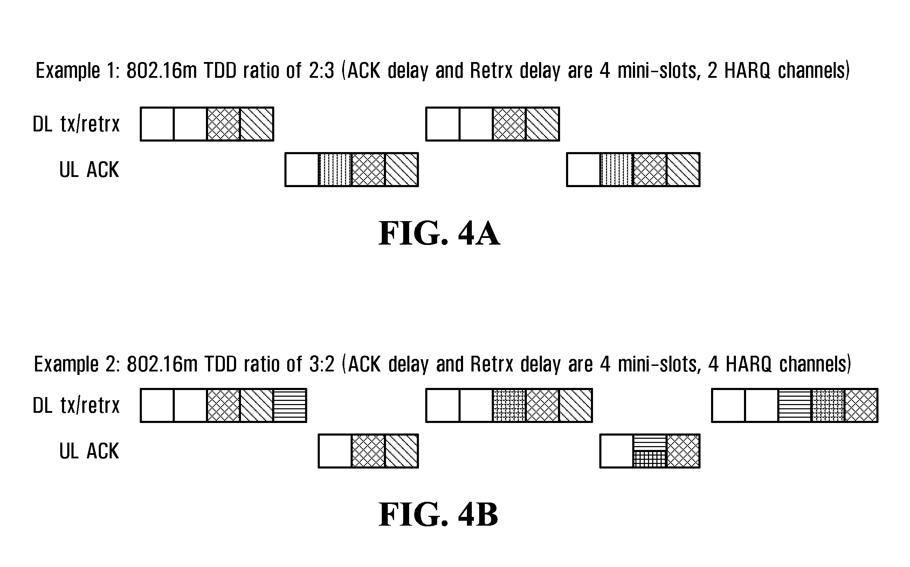

Figure 4A is a block diagram illustrating DL HARQ round trip delay, with an IEEE 802.16m TDD ratio of 2:3. The minimum HARQ ACK and Retrx (retransmission) delay and the number of HARQ channels are defined in system broadcast signaling which corresponds to particular partitioning of legacy, IEEE 802.16m, and TDD ratios (for the case of TDD). With these parameters defined, the precise HARQ timing can be deduced. In the embodiment of Figure 4A, ACK delay and retrx delay are four mini-slots, with two HARQ channels.

Figure 4B is a block diagram illustrating DL HARQ round trip delay, with an IEEE 802.16m TDD ratio of 3:2. In the embodiment of Figure 4B, ACK delay and retrx delay are four mini-slots, with four HARQ channels.

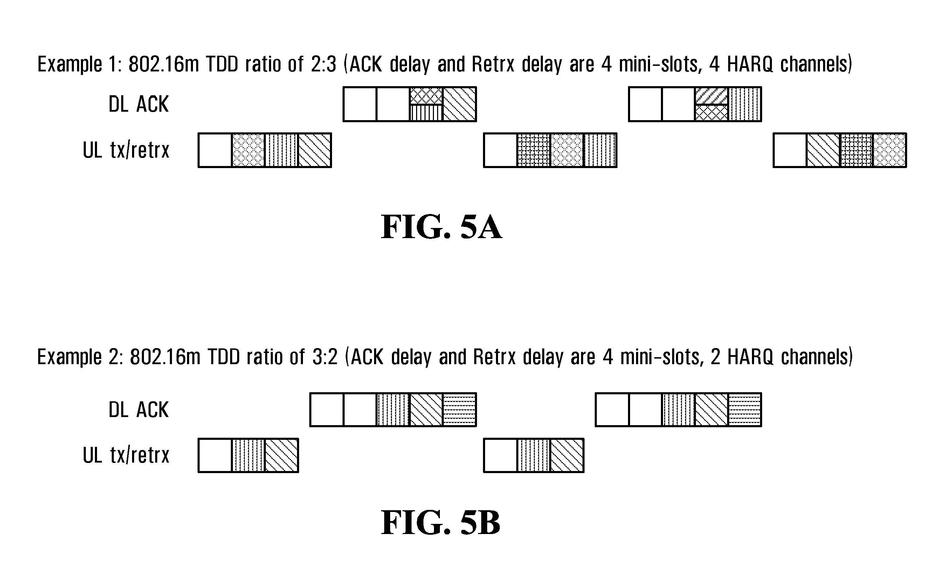

Figure 5A is a block diagram illustrating UL HARQ round trip delay, with an IEEE 802.16m TDD ratio of 2:3. In the embodiment of Figure 5A, ACK delay and retrx delay are four mini slots, with four HARQ channels.

Figure 5B shows UL HARQ round trip delay, with an IEEE 802.16m TDD ratio of 3:2. In the embodiment of Figure 5B, ACK delay and retrx delay are four mini slots, with four HARQ channels.

In the embodiments such as those illustrated in each of Figures 4A, 4B, 5A and 5B, the first mini-slot is reserved for legacy systems.

In Figures 4A and 5B, each shaded block illustrates the corresponding DL tx/retrx and UL ACK. Similarly, in Figures 5A and 5B each shed block illustrates the corresponding UL tx/retrax and DL ACK.

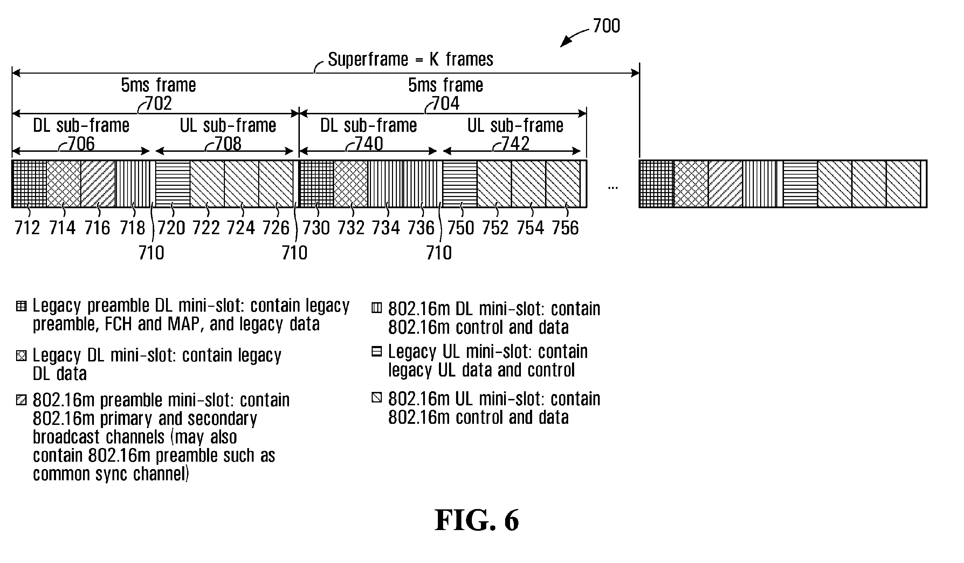

Figure 6 is a block diagram of a representative example of a superframe structure. Figure 6 shows the case of time division duplexing (TDD) of downlink and uplink transmissions. For the case of frequency division duplexing (FDD) of downlink and uplink transmissions, the downlink and uplink sub-frames shown in Figure 6 are on separate carrier frequencies rather than separate time. The following description of DL sub-frames and UL sub-frames still apply to the DL and UL of an FDD system, respectively.

In some embodiments, superframe 700 is comprised of K frames. In some embodiments, K = 4. Superframe 700 is comprised of a plurality of frames 702, 704, ... and in this example, frames 702, 704 are of 5 ms duration.

The first mini-slot 712 at the start of the superframe 700 or some predetermined fixed location within the superframe contains the IEEE 802.16m system parameter broadcast channels such as the primary and secondary broadcast channels and may also contain additional preamble (such as the common-sync channel) for IEEE 802.16m-only. In addition, the additional preamble for IEEE 802.16m-only (such as a common-sync channel) can be located at a fixed location within a superframe but separately from the primary/secondary broadcast channels.

In this embodiment, each frame (such as frame 702) is comprised of a DL sub-frame 706 and a UL sub-frame 708. Each sub-frame (such as DL sub-frame 706) is comprised of a number of mini-slots which, in this embodiment, is four.

In this embodiment, each sub-frame is separated from each other by a gap, such as a TTG/RTG 710.

DL sub-frame 706 is comprised of DL mini-slots 712, 714, 716 and 718. DL mini-slot 712 is reserved for a legacy DL preamble, FCH, MAP and legacy data. DL mini-slot 714 is a legacy DL mini-slot containing legacy DL data. DL mini-slot 716 is an IEEE 802.16m preamble mini-slot containing IEEE 802.16m primary and secondary broadcast channels. DL mini-slot 716 may also contain IEEE 802.16m preamble data such as a common-sync channel. DL mini-slot 718 is an IEEE 802.16m DL mini-slot containing IEEE 802.16m control and data.

In this embodiment, UL sub-frame 708 is comprised of UL mini-slots 722, 720, 724, and 726. UL mini-slot 720 is a legacy UL mini-slot containing legacy UL data and control. UL mini-slots 722, 722, 724 and 726 are IEEE 802.16m UL mini-slots containing IEEE 802.16m control and data.

Gap 710 separates frame 702 from frame 704. Frame 704 is comprised of DL sub-frame 740 and UL sub-frame 742. DL sub-frame 740 is comprised of DL mini-slots 730, 732, 734, and 736. DL mini-slot 730 is reserved for legacy DL preamble, FCH, MAP and legacy data. DL mini-slot 732 is a legacy DL mini-slot containing legacy DL data. DL mini-slots 734 and 736 are IEEE 802.16m DL mini-slots containing IEEE 802.16m control and data.

DL sub-frame 740 is separated from UL sub-frame 742 by gap 710. UL sub-frame 708 is comprised of UL mini-slots 750, 752, 754 and 756. UL mini-slot 750 is a legacy UL mini-slot containing legacy UL data and control. UL mini-slots 752, 754 and 756 are IEEE 802.16m UL mini-slots containing IEEE 802.16m control and data.

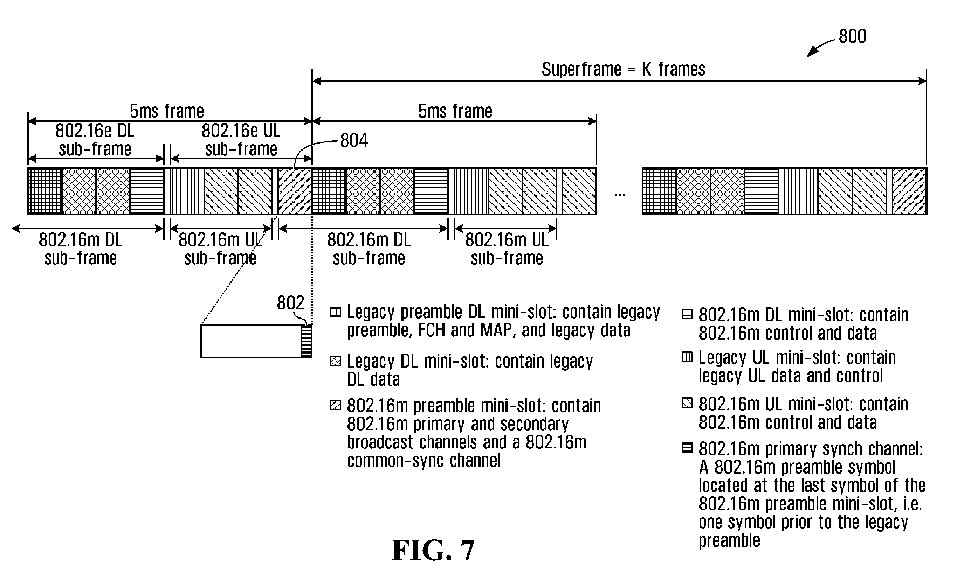

Figure 7 is a block diagram of an embodiment of an alternative superframe structure as compared to the one illustrated in Figure 6. The difference in this embodiment is that a common-sync channel/symbol 802 is located prior to the superframe 800 boundary. The common-sync channel/symbol can be contained within the IEEE 802.16m preamble mini-slot 804.

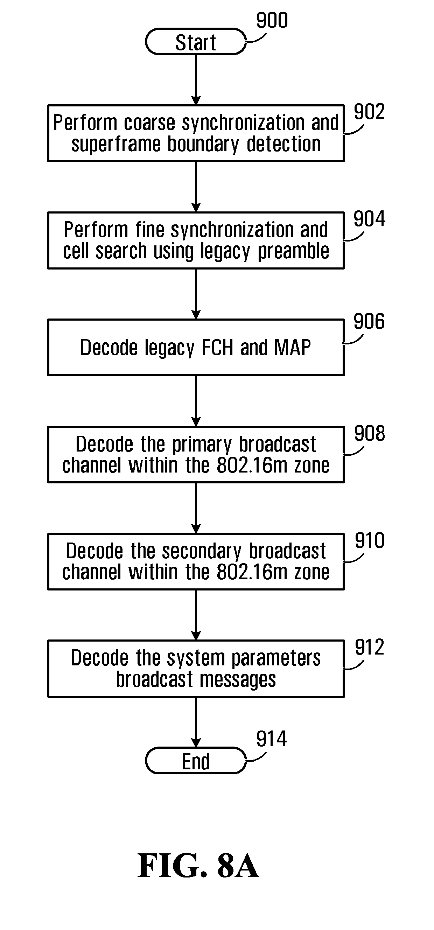

Figure 8A is a flowchart of exemplary steps for initial system access for an MS configured to support IEEE 802.16m according to one embodiment.

At step 900, the procedure is started.

At step 902, the IEEE 802.16m-enabled MS may perform coarse synchronization and superframe boundary detection using the IEEE 802.16m common-sync channel/symbol (if such channel/symbol exists).

At step 904, the IEEE 802.16m-enabled MS may perform fine synchronization and a cell search using the legacy preamble.

At step 906, the IEEE 802.16m-enabled MS may decode the legacy broadcast control channels, for example, FCH and MAP and therefore determine the location of the IEEE 802.16m zone from the legacy MAP.

At step 908, the IEEE 802.16m-enabled MS may decode the primary broadcast channel within the IEEE 802.16m zone. The primary broadcast channel can be transmitted at the beginning or at a predefined resource location within the IEEE 802.16m preamble mini-slot. (A superframe can consist of L frames, where L is predefined and the superframe boundary can be indicated in the legacy MAP in case there is no IEEE 802.16m common-sync channel. Otherwise, the superframe boundary is implied by the location of the common-sync channel detected in step 902). The primary broadcast channel can contain deployment-wide PHY parameters which do not change from one superframe to another. For example, system bandwidth, multi-carrier configuration, system time, etc. The primary broadcast channel can be encoded or employ repetition coding over multiple superframes to improve robustness.

At step 910, the IEEE 802.16m-enabled MS may decode the secondary broadcast channel within the IEEE 802.16m zone. The secondary broadcast channel can be transmitted at the beginning of a predefined resource location within the IEEE 802.16m preamble mini-slot. The secondary broadcast channel can be encoded in one superframe. The secondary broadcast channel can contain essential PHY parameters for the proper decoding of PHY frame and PHY traffic and control channel within the corresponding superframe. The information (channelization, zones configuration) can change every superframe.

At step 912, the IEEE 802.16m-enabled MS can decode the system parameter broadcast messages. The system parameter broadcast messages can be sent on a regular traffic channel, and contain physical layer and MAC layer MAC system parameters that are semi-statically configured, e.g. HO parameters, power control parameters, etc.

Note that the IEEE 802.16m-enabled MS can also decode the legacy system broadcast messages (i.e. DCD and UCD) within the legacy DL zone to obtain common system information shared between the legacy system and IEEE 802.16m system. The primary and secondary broadcast channel can be superposed onto the same OFDMA time/frequency resource and successive decoding can be employed to decode the primary and secondary broadcast channels.

At step 914, the procedure terminates.

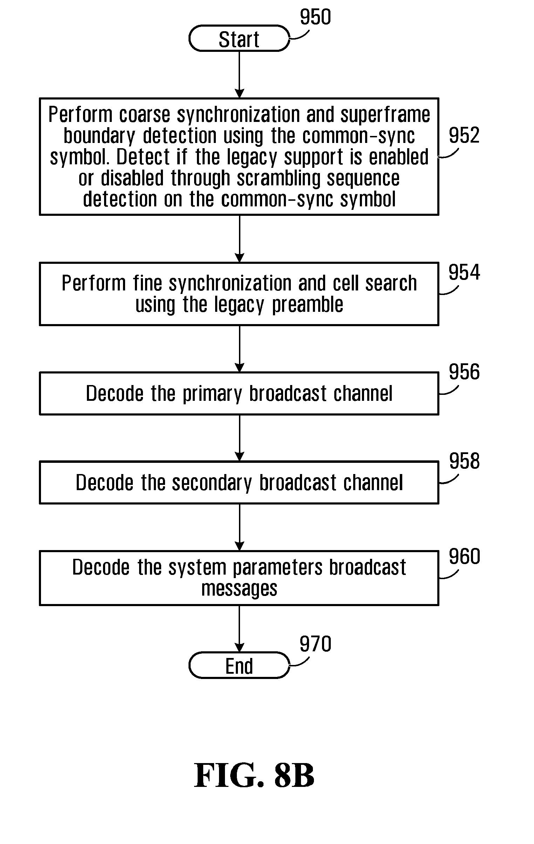

Figure 8B is a flowchart of exemplary steps for initial system access for an IEEE 802.16m Mobile Station (MS) according to another embodiment.

At step 950, the procedure is started.

At step 952, the IEEE 802.16m-enabled MS performs coarse synchronization and superframe boundary detection using the common-sync symbol. The MS then detects if the legacy support is enabled or disabled through scrambling sequence detection on the common-sync symbol.

At step 954, the IEEE 802.16m-enabled MS performs fine synchronization and cell search using the legacy preamble.

At step 956, the IEEE 802.16m-enabled MS decodes the primary broadcast channel. The primary broadcast channel is transmitted at a predefined resource location within the preamble mini-slot. The primary broadcast channel contains deployment-wide PHY parameters which don't change from one superframe to another. For example, system bandwidth, multi-carrier configuration, system time, etc. The primary broadcast channel can be encoded or employ repetition coding over multiple superframes to improve robustness.

At step 958, the IEEE 802.16m-enabled MS decodes the secondary broadcast channel. The secondary broadcast channel is transmitted at a predefined resource location within the preamble mini-slot. The secondary broadcast channel is encoded in one superframe. It contains essential PHY parameters for the proper decoding of the PHY frame and PHY traffic and control channel within the corresponding superframe. The information (channelization, zones configuration) can change every superframe.

At step 960, the IEEE 802.16m-enabled MS decodes the system parameter broadcast messages. The system parameter broadcast messages are sent on a regular traffic channel. They contain PHY/MAC system parameters that are semi-statically configured, e.g. HO parameters, power control parameters, etc.

The primary and secondary broadcast channels can be superposed onto the same OFDMA time/frequency resource and successive decoding can be employed to decode to primary and secondary broadcast channels.

At step 970, the procedure terminates.

Persons skilled in the art will appreciate that instead of the TDM of IEEE 802.16m and legacy resources in a frame as described in Figures 1-8B, the IEEE 802.16m and legacy resources can also be Frequency Division Multiplexed (FDM).

A set of physical subcarriers are reserved for legacy systems.

Those reserved sub-carriers are bypassed by the IEEE 802.16m resource definition, i.e. the IEEE 802.16m logical subchannel resource only maps to the non-reserved physical sub-carriers.

The sub-carrier reserved for legacy systems can be dynamically changed from frame to frame.

In the case of Partially Used Sub-Carrier (PUSC) channelization or distributed channelization of the legacy system, a number of major subgroups or zones are reserved for the legacy system, so that the legacy logical subchannel resource maps to those reserved subgroups.

In the case of band Adaptive Modulation and Coding (AMC) or localized channelization of the legacy system, the number of localized resource units or tiles can be dynamically assigned to legacy systems and IEEE 802.16m systems.

Figures 1-8B and corresponding description may enable a person of ordinary skill in the art to realize the following advantageous functionality.

A transmission frame consists of time division multiplexing (TDM) and/or frequency division multiplexing (FDM) of two or more systems or waveforms onto the same RF carrier and bandwidth.

A transmission frame consists of multiple equal-size smaller frames, where each smaller frame constitutes the basic unit of time-frequency resource definition, time-division duplex (TDD) partitioning between downlink and uplink, and time division multiplexing (TDM) between two or more OFDMA systems or formats.

The start of the TDD downlink portion or uplink portion within a frame can be different for different systems that are multiplexed onto the same RF carrier and bandwidth.

A superframe consists of multiple equal-size frames, where each frame is further divided into multiple equal-size smaller frames. The superframe boundary and duration can be different for different systems that are multiplexed onto the same RF carrier and bandwidth in TDM or FDM fashion.

A transmission frame or superframe consists of a universal synchronization channel such as a universal preamble shared by multiple types of systems and system-specific synchronization channels or a system-specific preamble used by the corresponding system. The system-specific synchronization channel occurs at a fixed location within the superframe of the corresponding system. The universal synchronization channel and system-specific synchronization channel puncture out one or more symbols of one or more designated smaller frames within a frame or superframe.

A superframe consists of one or more system parameter broadcast channels at a predefined location within the superframe. The system parameter broadcast channels are superposed onto the same time-frequency resource within the superframe.

The Hybrid ARQ (HARQ) acknowledgement (ACK) and retransmission timing of a system within a frame or superframe are defined by the ACK delay, retransmission delay, the number of parallel HARQ channels, the TDD DL:UL ratio and the TDM resources allocated to the system. This information is broadcast by the base station to the mobile station and the mobile station deduces the HARQ ACK timing and retransmission timing based on this information.

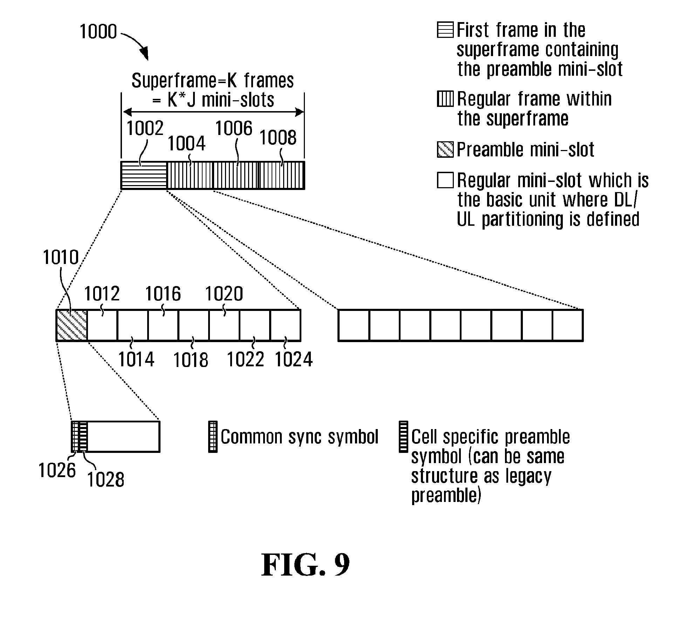

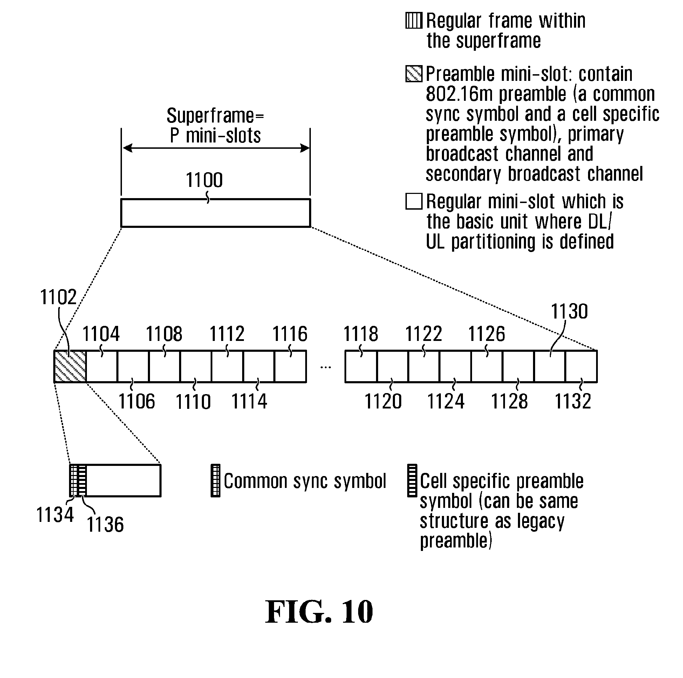

Figures 9 and 10 are block diagrams showing alternative frame structures used in connection with other embodiments. In both figures, a superframe is shown consisting of multiple equal-size frames, where each frame can be further divided into multiple equal-size smaller frames. As well, a preamble frame or smaller frame can be located in a predefined location within the superframe and defines the superframe boundary.

Figures 9 and 10 show cases of TDD of downlink and uplink transmissions when legacy support is disabled for the case of single band operation. For the case of FDD of downlink and uplink transmissions, the downlink and uplink sub-frames shown in Figures 9 and 10 are on separate carrier frequencies rather than separate time. The following description of DL sub-frame and UL sub-frame still apply to the DL and UL of an FDD system, respectively.

Figure 9 is a block diagram showing a representative frame structure where a superframe 1000 consists of K frames 1002, 1004, 1006, and 1008 according to an embodiment.

Each frame (e.g. frame 1002) consists of J mini-slots 1010, 1012, ... 1024. J can be set to 8 to align with the legacy support mode. The TDD DL-to-UL and UL-to-DL switches are defined within a frame. The DL/UL partition is defined in units of mini-slots.

The first mini-slot 1010 at the start of the superframe 1000 is the preamble mini-slot. The preamble mini-slot is defined such that an IEEE 802.16m-enabled MS performs the same synchronization and cell search procedure as in the case where legacy support is enabled. The preamble mini-slot 1010 contains a common-sync symbol 1026, followed by a cell-specific preamble symbol 1028 which can be the same structure as the legacy preamble, the primary broadcast channel and the secondary broadcast channel.

The common-synchronization channel is scrambled by unique sequences to indicate the types of systems multiplexed onto the same RF carrier and bandwidth as that of the preamble frame or smaller frame. Thus, different scrambling sequences can be used in the common-sync symbol 1026 to indicate whether legacy support is enabled or disabled.

Figure 10 is a block diagram showing a representative frame structure where a superframe 1100 consists of P mini-slots 1102, 1104, ... 1132 according to an embodiment.

The TDD DL/UL partition is defined in units of mini-slots. The TDD ratios are defined by M:N where M is the number of adjacent DL mini-slots followed N adjacent UL mini-slots.

The first mini-slot 1102 at the start of the superframe 1100 is the preamble mini-slot 1102. The preamble mini-slot 1102 is defined such that an IEEE 802.16m-enabled MS performs the same synchronization and cell search procedure as in the case where legacy support is enabled. The preamble mini-slot 1102 contains a common-sync symbol 1134, followed by a cell-specific preamble symbol 1136 which can be the same structure as the legacy preamble, the primary broadcast channel and the secondary broadcast channel.

Different scrambling sequences are used in the common-sync symbol 1134 to indicate whether legacy support is enabled or disabled.

The following description sets out a frame structure for IEEE 802.16m multi-band operation, which is applicable to the following cases: 1) IEEE 802.16m MSs operating on a smaller or equal bandwidth than the IEEE 802.16m BS; 2) legacy MSs operating on a smaller or equal bandwidth than the IEEE 802.16m BS.

In single carrier mode, a single wideband FFT that spans the system bandwidth is used at the BS. The BS supports MSs (legacy MSs and IEEE 802.16m MSs) with different bandwidth capabilities up to the system bandwidth. This mode is suitable for the case of contiguous spectrum allocation.

In multi-carrier mode, the system bandwidth is segmented into multiple smaller bands. A separate Fast Fourier Transform (FFT) and filter is used at each band. This mode supports MSs with different bandwidth capabilities up to the system bandwidth. This mode is suitable for the case of non-contiguous spectrum allocation and for operator carrier-upgrade scenarios.

Allowing IEEE 802.16m MSs with different bandwidth capabilities has implications on system overhead. First, a guard band is required between adjacent bands within the system bandwidth. Second, IEEE 802.16m preamble and broadcast signaling has to be present in the bands that support the corresponding types of IEEE 802.16m MSs.

Within the system bandwidth, there can be zero or multiple legacy-only bands, zero or multiple mixed (legacy plus IEEE 802.16m) bands and zero or multiple IEEE 802.16m-only bands.

It should be noted that enabling IEEE 802.16m MSs to operate with different bandwidth capabilities may have implications on system overhead. A guard band is required between adjacent bands within the system bandwidth. In addition, an IEEE 802.16m preamble and broadcast signaling has to be present in the bands that support the corresponding types of IEEE 802.16m MSs.

For a given IEEE 802.16m deployment bandwidth, three scenarios are described.

In Scenario 1 (legacy support case) where an IEEE 802.16m system bandwidth is larger than the bandwidth supported by the legacy MS. In this case the IEEE 802.16m system and legacy system are overlaid in both FDM and TDM fashion.

In Scenario 2 where IEEE 802.16m system bandwidth is larger than the bandwidth supported by the IEEE 802.16m-enabled MS.

In Scenario 3 which is a combination of scenarios 1 and 2. In this case, the combination of proposed schemes for scenarios 1 and 2 can be used.

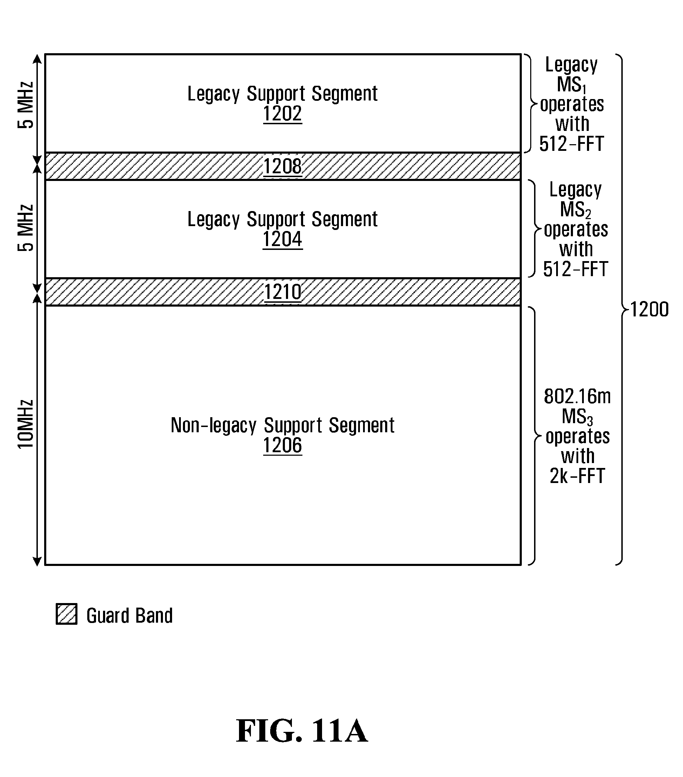

Figures 11A-14E show the case of TDD of downlink and uplink transmission. For the case of FDD of downlink and uplink transmission, the downlink and uplink sub-frames shown in Figures 11A-14C are on separate carrier frequencies rather than separate time. The following description of DL sub-frame and UL sub-frame still apply to the DL and UL of an FDD system respectively.

Figure 11A is a block diagram showing a first example multi-band scenario (see Scenario 1 above) where the available IEEE 802.16m system bandwidth of 20 MHz 1200 is partitioned into multiple segments 1202, 1204 and 1206. The IEEE 802.16m DL/UL transmission is on a single carrier with an FFT covering the entire bandwidth.

There are two 5 MHz legacy-only bands (in this case represented by segments 1202 and 1204) and one 10 MHz IEEE 802.16m-only band 1206. Guard band 1208 separates legacy support segment 1202 and legacy support segment 1204. Guard band 1210 separates legacy support segment 1204 and non-legacy support segment 1206. Any non-legacy support segments should be adjacent to each other in order to avoid the guard band.

Any legacy MS in the network (in this example, legacy MS₁ and legacy MS₂) operate with 512-FFT at 5 MHz bandwidth.

Any IEEE 802.16m-enabled MS (in this example, MS₃) operates with 1K FFT at 10 MHz.

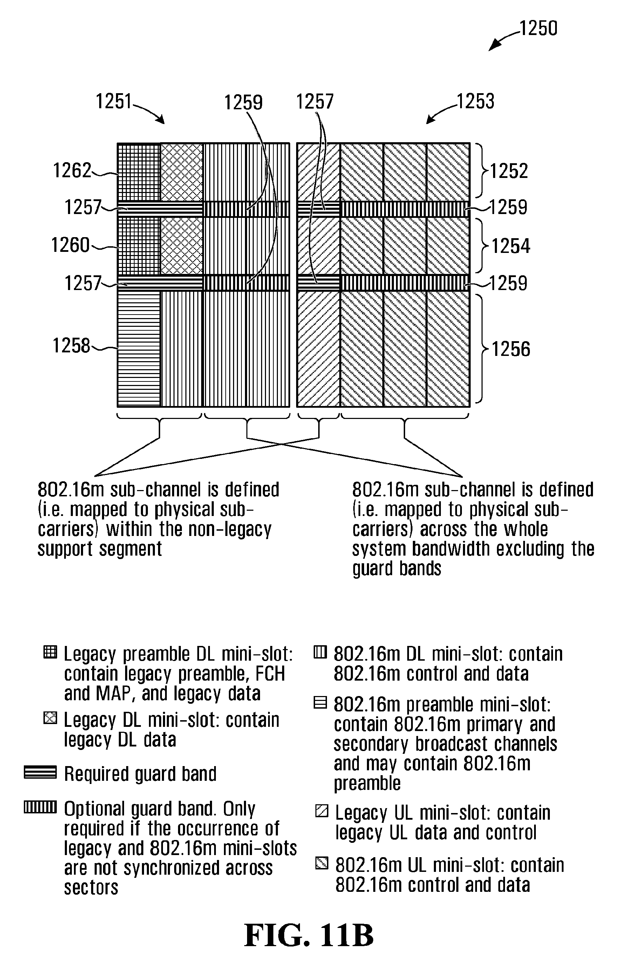

Figure 11B shows the frame structure of the multi-band scenario 1200 illustrated in Figure 11A. Frames 1252 and 1254 are legacy frames where legacy and IEEE 802.16m transmission is TDM as previously defined (these frames are meant to correspond with legacy support segments 1202 and 1204 in Figure 11A). Frame 1256 comprises a non-legacy frame (meant to correspond with non-legacy support segment 1206 in Figure 11A), where the frame structure is as previously defined, except that the IEEE 802.16m preamble may not be transmitted on the preamble mini-slot.

Frame structure 1250 is comprised of DL mini-slots 1201 and UL mini-slots 1203. Required guard bands 1257 separate the frames. Optional guard bands 1259 are only required if the occurrence of legacy and IEEE 802.16m mini-slots are not synchronized across sectors.

The IEEE 802.16m sub-channel is either defined (i.e. mapped to physical sub-carriers) across the segments available for IEEE 802.16m on a mini-slot by mini-slot basis or defined within each segment. Correspondingly, the IEEE 802.16m control channels are either defined across the available segments for IEEE 802.16m to indicate the sub-channel resource allocation across the available segments, or defined within each segment to indicate the sub-channel resource within each segment.

There are different options for where the IEEE 802.16m preamble mini-slot can be located.

Option 1: The IEEE 802.16m preamble mini-slot 1258 is located in the non-legacy support segment 1256. It coincides with the legacy preamble mini-slot in time. This option is shown in Figure 11B.

Option 2: The IEEE 802.16m preamble mini-slot is located in the non-legacy support segment 1256. The IEEE 802.16m preamble mini-slot 1260, 1262 does not coincide with the legacy preamble mini-slot in time. At the time when the legacy preamble mini-slot is transmitted, there may be no transmission on the non-legacy support segment. This allows the BS transmit power to concentrate on the legacy preamble transmission. This can improve the coverage of the system for initial access. This option is not shown.

Option 3: The IEEE 802.16m preamble mini-slot and common-sync are located in the legacy support segment 1252 in the same way as the single-band case (i.e. in legacy preamble DL mini-slot 1262). This is recommended since after preamble detection, an IEEE 802.16m-enabled MS would not have knowledge of the overall system bandwidth, where the non-legacy support segment can be found, and whether legacy support is enabled. In addition, this option allows the IEEE 802.16m-enabled MS to use the same synchronization and cell search, and initial access procedures for both single band and multi-band operations. At the time when the legacy preamble is transmitted, and/or when the IEEE 802.16m common-sync symbol is transmitted, and/or when the IEEE 802.16m primary/secondary broadcast channels are transmitted, there may be no transmission on the non-legacy support segment. This can allow the BS transmit power to concentrate on the preamble transmission and broadcast channel transmission. This can improve the coverage of the system for initial access.

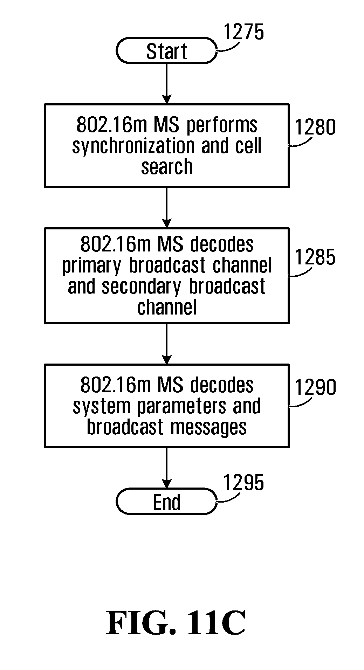

Figure 11C is a flowchart showing the steps for initial access for an IEEE 802.16m-enabled MS using the multi-band scenario of Figures 11A and 11B.

At step 1275, the process begins.

At step 1280, an IEEE 802.16m-enabled MS detects the IEEE 802.16m common-sync, the legacy preamble and performs synchronization and cell search.

At step 1285, the IEEE 802.16m-enabled MS decodes the primary broadcast channel and the secondary broadcast channel on the IEEE 802.16m preamble mini-slot.

At step 1290, the IEEE 802.16m-enabled MS decodes the system parameter broadcast messages. The information in these channels and messages indicates the overall system bandwidth, the legacy and non-legacy support segments and their corresponding IEEE 802.16m mini-slots, FFT size, and guard bands.

At step 1295, the process ends.

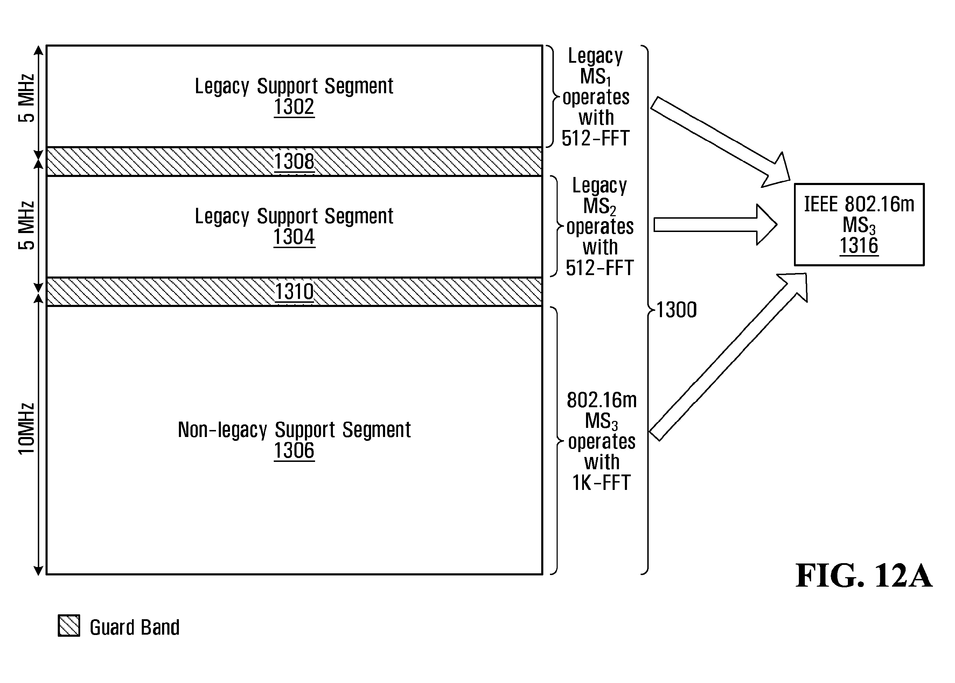

Figure 12A is a block diagram showing a second example multi-band scenario (Scenario 1) where the available IEEE 802.16m system bandwidth of 20 MHz 1300 is partitioned into multiple segments 1302, 1304 and 1306.

One or more 5 MHz segments of the spectrum are defined as legacy support segments (in this case segments 1302 and 1304). Guard band 1308 separates legacy support segment 1302 and legacy support segment 1304. Guard band 1310 separates legacy support segment 1304 and non-legacy support segment 1306. Any non-legacy support segments should be adjacent to each other in order to avoid the guard band.

In this example, legacy MS₁ and legacy MS₂ operate with 512-FFT at a 5 MHz bandwidth.

The IEEE 802.16m-enabled MS₃ 1316 operates with 1K FFT at a 10 MHz bandwidth. The IEEE 802.16m DL/UL transmission is on multiple carriers, e.g. carrier 1 with 512-FFT, carrier 2 with 512-FFT, carrier 3 with 1k-FFT. This means that an IEEE 802.16m-enabled MS such as MS₃ 1316 may simultaneously transmit/receive on one or multiple segments/carriers by performing multi-carrier decoding using multiple FFT sizes or single carrier wideband decoding using the 2K-FFT.

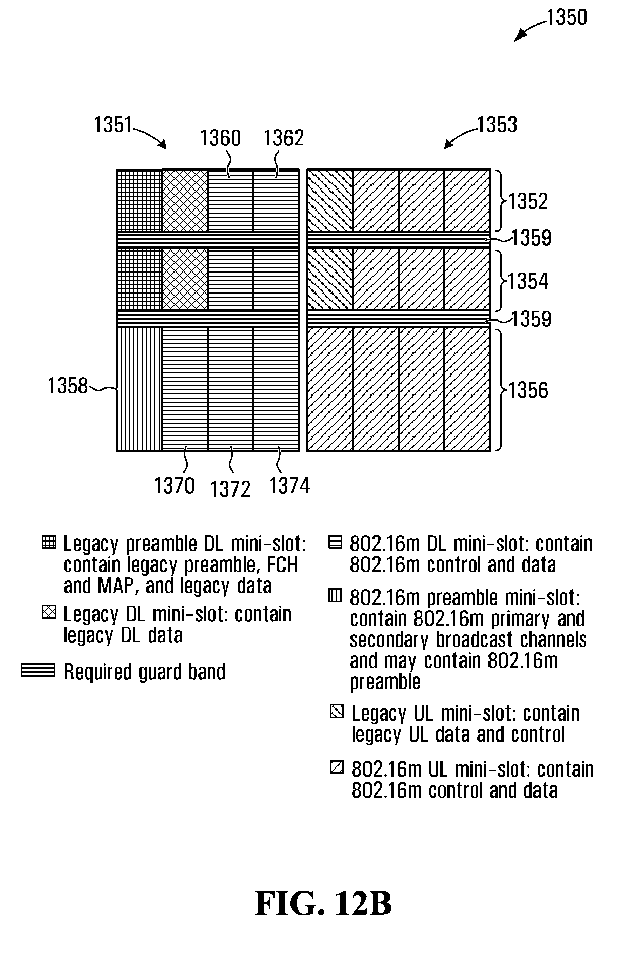

Figure 12B shows a representative frame structure of the multi-band scenario 1300 illustrated in Figure 12A. Multi-band scenario 1350 is comprised of DL mini-slots 1351 and UL mini-slots 1353.

Segments 1352 and 1354 comprise legacy support segments where legacy and IEEE 802.16m transmission is TDM as previously defined. Segment 1356 comprises a non-legacy support segment, where the frame structure is as previously defined, except that the IEEE 802.16m preamble may not be transmitted on the preamble mini-slot. Required guard bands 1359 separate the segments.

The IEEE 802.16m sub-channel is defined (i.e. mapped to physical sub-carriers) within each segment. The IEEE 802.16m control channels are defined within each segment to indicate the sub-channel resource allocation across that segment.

There are different options for where the IEEE 802.16m preamble mini-slot can be located.

Option 1: The IEEE 802.16m preamble mini-slot 1358 is located in the non-legacy support segment 1356. It coincides with the legacy preamble mini-slot in time. This is shown in Figure 12A.

Option 2: The IEEE 802.16m preamble mini-slot is located in the non-legacy support segment 1356 but does not coincide with the legacy preamble mini-slot in time. As such, any of mini-slots 1370, 1372 or 1374 could be used. At the time when the legacy preamble mini-slot is transmitted, there may be no transmission on the non-legacy support segment. This allows the BS transmit power to concentrate on the legacy preamble transmission. This can improve the coverage of the system for initial access. This is not shown in Figure 12A.

Option 3: The IEEE 802.16m preamble mini-slot and common-sync is located in the legacy support segment 1352 in the same way as the single-band case, i.e. in either of DL mini-slot 1360 or 1362. This is the recommended since after preamble detection, an IEEE 802.16m-enabled MS would not have knowledge of the overall system bandwidth, where the non-legacy support segment can be found, and whether legacy support is enabled. In addition, this option allows the IEEE 802.16m-enabled MS to use the same synchronization and cell search, and initial access procedures for both single band and multi-band operations. At the time when the legacy preamble is transmitted, and/or when the IEEE 802.16m common-sync symbol is transmitted, and/or when the IEEE 802.16m primary/secondary broadcast channels are transmitted, there may be no transmission on the non-legacy support segment. This allows the BS transmit power to concentrate on the preamble transmission and broadcast channel transmission. This can improve the coverage of the system for initial access.

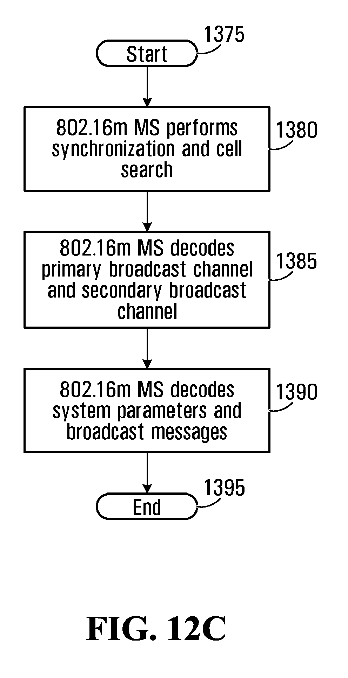

Figure 12C is a flowchart showing the steps for initial access for an IEEE 802.16m-enabled MS using the multi-band scenario of Figures 12A and 12B.

At step 1375, the process begins.

At step 1380, an IEEE 802.16m-enabled MS detects the IEEE 802.16m common-sync, the legacy preamble and performs synchronization and cell search on one of the legacy segments.

At step 1385, the IEEE 802.16m-enabled MS decodes the primary broadcast channel and the secondary broadcast channel on the IEEE 802.16m preamble mini-slot.

At step 1390, the IEEE 802.16m-enabled MS decodes the system parameters and broadcast messages. The information in these channels and messages indicate the overall system bandwidth, the legacy and non-legacy support segments and their corresponding IEEE 802.16m mini-slots, FFT size, and guard bands.

At step 1395, the process ends.

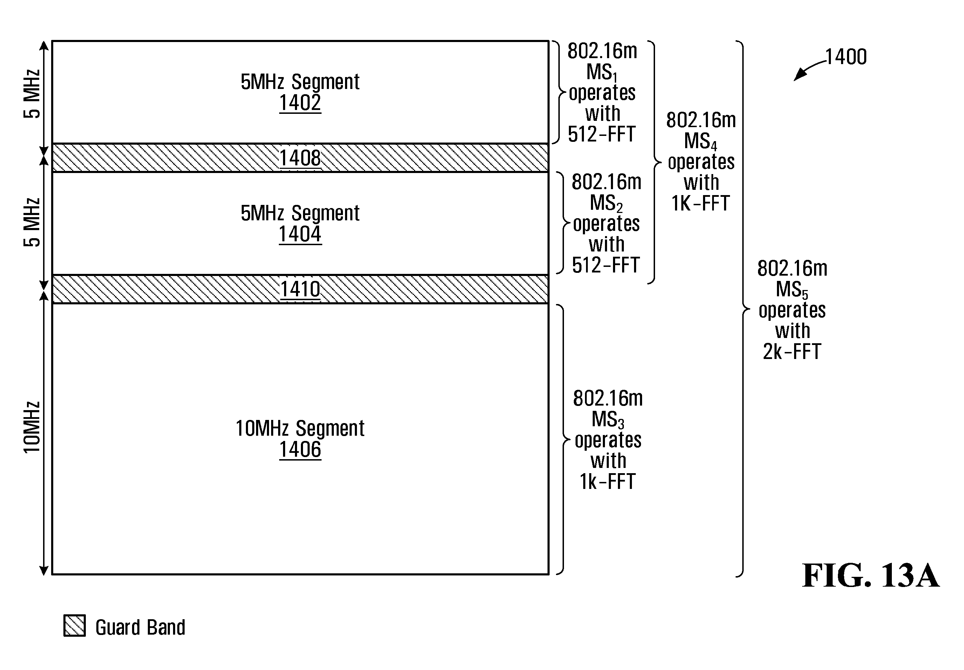

Figure 13A is a block diagram showing a third example multi-band scenario (see Scenario 2 above) where the available IEEE 802.16m system bandwidth of 20 MHz 1400 is partitioned into multiple segments 1402, 1404 and 1406.

In Figure 13A, there are three types of IEEE 802.16m-enabled MSs, supporting 5 MHz, 10 MHz and 20 MHz bandwidths respectively. An IEEE 802.16m-enabled MS₁ (a first type of IEEE 802.16m-enabled MS) operates with 512-FFT on 5 MHz segment 1402. An IEEE 802.16m-enabled MS₂ (a first type of IEEE 802.16m-enabled MS) operates with 512-FFT on 5 MHz segment 1404. An IEEE 802.16m-enabled MS₃ (a second type of IEEE 802.16m-enabled MS) operates with 1k-FFT on 10 MHz segment 1406. An IEEE 802.16m-enabled MS₄ (a second type of IEEE 802.16m-enabled MS) operates with 1k-FFT on 5 MHz segments 1402 and 1404. An IEEE 802.16m-enabled MS₅ (a third type of IEEE 802.16m-enabled MS) operates with 2k-FFT on 5 MHz segments 1402 and 1404, and 10 MHz segment 1406.

Guard band 1408 separates 5 MHz segment 1402 and 5 MHz segment 1404. Guard band 1410 separates 5 MHz segment 1404 and 10 MHz segment 1406. To minimize the number of guard bands, the number of segments should be minimized

In this example, the IEEE 802.16m enabled BS transmits/receives on a single carrier using 2k-FFT operation.

An IEEE 802.16m sub-channel can be defined within each segment illustrated in Figure 13A. An MS can be assigned a sub-channel resource in segments that have bandwidth equal to or smaller than the MS bandwidth capability.

For example, a 5 MHz MS can be assigned to either of 5 MHz segments 1402, 1404 by the BS signaling the center frequency of the corresponding segment in a slower fashion (through unicast control signaling after network entry). A 10 MHz MS can be assigned to either of the two 5 MHz segments 1402, 1404 or to the 10 MHz segment 1406 by the BS signaling the center frequency of the two 5 MHz segments 1402, 1404 or the 10 MHz segment 1406 in a slower fashion (through unicast control signaling after network entry). A 20 MHz MS can be assigned to any of the 5 MHz segments 1402, 1404 and 10 MHz segment 1406 dynamically since the center frequency does not change.

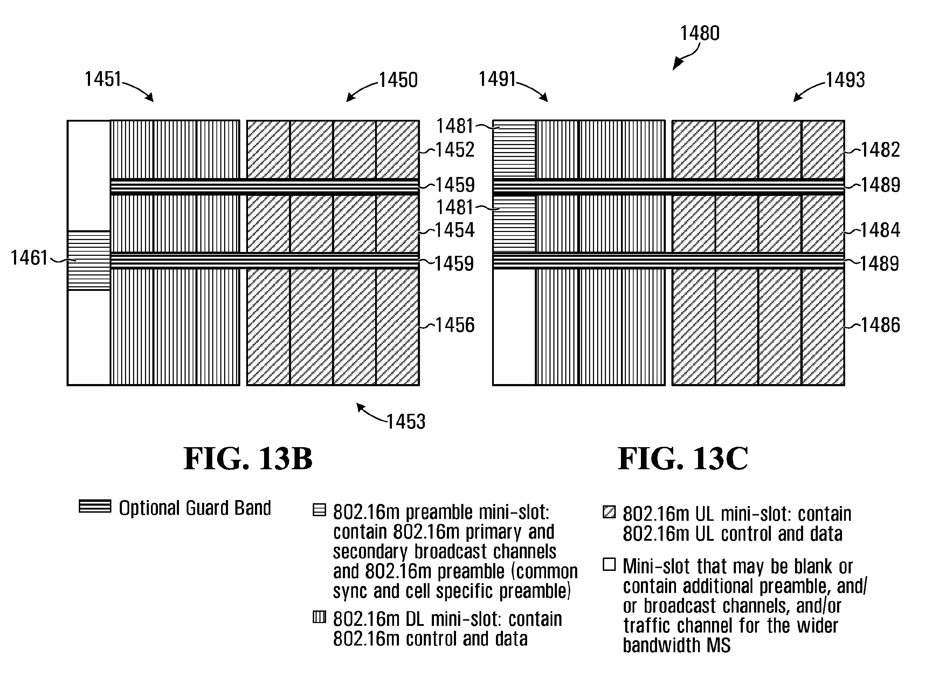

Figure 13B shows further details of the multi-band scenario 1400 illustrated in Figure 13A showing a first option of where the preamble mini-slot could be located. Multi-band scenario 1540 is comprised of DL mini-slots 1451 and UL mini-slots 1453.

Segments 1452 and 1454 comprise 5 MHz segments. Segment 1456 comprises a 10 MHz segment. Optional guard bands 1459 separate the segments. A guard band is not required if all the frequency subcarriers are assigned to a wideband MS. For example, the guard band between two 5 MHZ segments is not required if both segments are assigned to a 10 MHz MS. The existence of guard tones on each mini-slot is signaled through a broadcast channel, e.g. the secondary broadcast channel.

In this first option, preamble mini-slot 1461 is located at the center of the RF frequency to minimize detection time. The bandwidth where the preamble mini-slot is transmitted should be the minimum of the bandwidth capacity of the IEEE 802.16m-enabled MSs.

Figure 13C shows a representative frame structure of the multi-band scenario 1400 illustrated in Figure 13A showing a second option of where the preamble mini-slot could be located. Multi-band scenario 1480 is comprised of DL mini-slots 1491 and UL mini-slots 1493.

Segments 1482 and 1484 comprise 5 MHz segments. Segment 1486 comprises a 10 MHz segment. Optional guard bands 1489 separate the segments.

In this second option, preamble mini-slot 1481 is located at one or multiple segments (two segments are illustrated in Figure 13C). In this case, the MS has to search the preamble over multiple possible choices of segments, which can be a preferred option to align with the legacy support mode where the preamble is located at one or multiple segments.

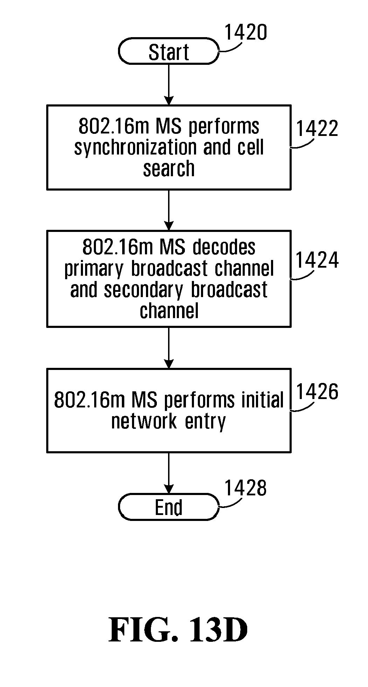

Figure 13D is a flowchart showing the steps for initial access for an IEEE 802.16m-enabled MS using the multi-band scenario of Figure 13B.

At step 1420, the process begins.

At step 1422, an IEEE 802.16m-enabled MS detects the common-sync and cell-specific preamble on the IEEE 802.16m preamble mini-slot on one of the segments and performs synchronization and cell search.

At step 1424, the IEEE 802.16m-enabled MS decodes the primary broadcast channel and the secondary broadcast control channels on the IEEE 802.16m preamble mini-slot. The information in these channels includes system bandwidth, bandwidth segments, reserved tones, and guard tones.

At step 1426, the IEEE 802.16m-enabled MS performs initial network entry on one of the segments based on the MS bandwidth capability as well as the recommended initial network entry segment(s) indicated by the BS in the primary/secondary broadcast channel. Note that the BS can designate one or multiple segments as the initial network entry segments.

At step 1428, the process ends.

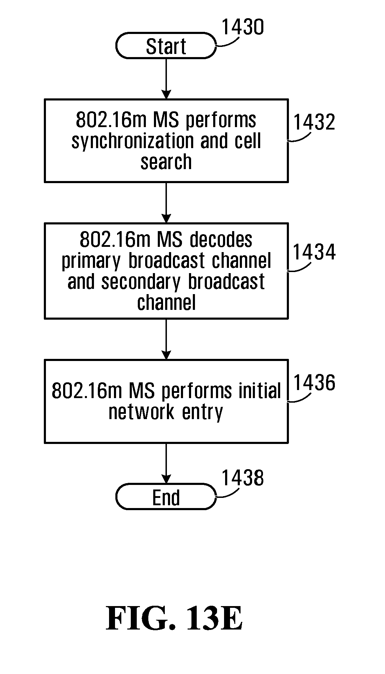

Figure 13E is a flowchart showing the steps for initial access for an IEEE 802.16m-enabled MS using the multi-band scenario of Figure 13C.

At step 1430, the process begins.

At step 1432, an IEEE 802.16m-enabled MS detects the common-sync and cell-specific preamble on the IEEE 802.16m preamble mini-slot on one of the segments and performs synchronization and cell search.

At step 1434, the IEEE 802.16m-enabled MS decodes the primary broadcast channel and the secondary broadcast control channels on the IEEE 802.16m preamble mini-slot. The information in these channels includes system bandwidth, bandwidth segments, reserved tones, and guard tones.

At step 1436, an MS performs initial network entry on one of the segments based on the MS bandwidth capability as well as the recommended initial network entry segment(s) indicated by the BS in the primary/secondary broadcast channel. Note that BS can designate on or multiple segments as the initial network entry segments. Those segments designated for network entry can be the same or different than the segments containing the preamble mini-slot.

At step 1438, the process ends.

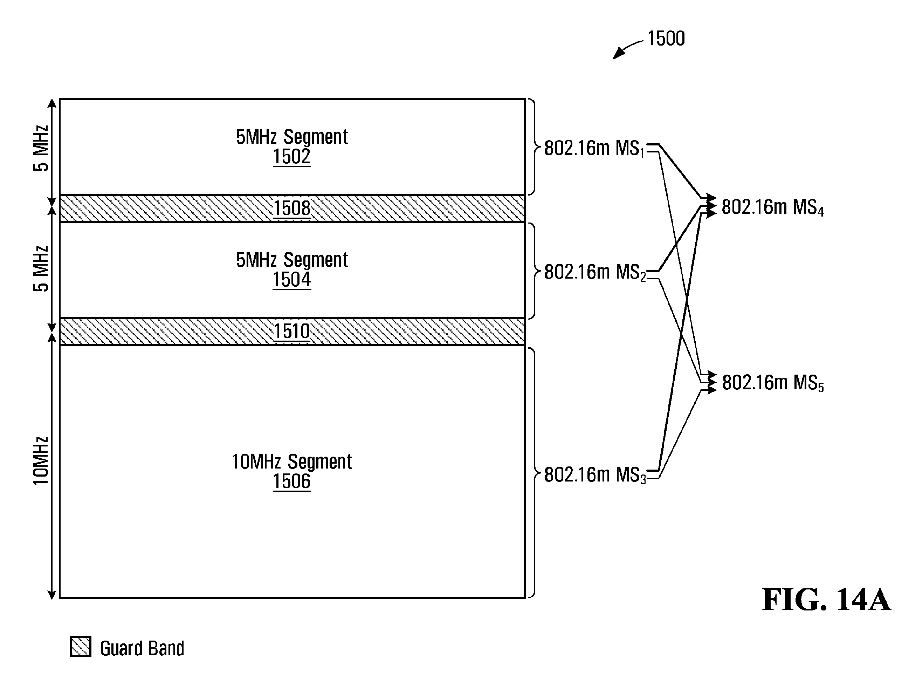

Figure 14A is a block diagram showing a fourth example multi-band scenario (see Scenario 2 above) where the available IEEE 802.16m system bandwidth of 20 MHz 1500 is partitioned into multiple segments 1502, 1504 and 1506.

In Figure 14A, multiple segments 1502, 1504 and 1506 support an IEEE 802.16m-enabled MS having three different bandwidth capabilities (in this case, 5 MHz, 10 MHz and 20 MHz bandwidth respectively). An IEEE 802.16m-enabled MS₁ (a first type of IEEE 802.16m-enabled MS) operates with 512-FFT on 5 MHz segment 1502. An IEEE 802.16m-enabled MS₂ (also a first type of IEEE 802.16m-enabled MS) operates with 512-FFT on 5 MHz segment 1504. An IEEE 802.16m-enabled MS₃ (a second type of IEEE 802.16m-enabled MS) operates with 1k-FFT on 10 MHz segment 1506.

An IEEE 802.16m-enabled MS₄ (also a second type of IEEE 802.16m-enabled MS) operates with 1k-FFT on 5 MHz segments 1402 and 1404 or on 10 MHz segment 1506. In other words, MS₄ can simultaneously decode two adjacent 5 MHz segments or one 10 MHz segment.

An IEEE 802.16m-enabled MS₅ (a third type of IEEE 802.16m-enabled MS) operates with 2k-FFT on 5 MHz segments 1502 and 1504, and 10 MHz segment 1506. In other words MS₅ can simultaneously decode multiple segments each with a corresponding FFT size or can perform wideband decoding with a single 2k-FFT.

Guard band 1508 separates 5 MHz segment 1502 and 5 MHz segment 1504. Guard band 1510 separates 5 MHz segment 1504 and 10 MHz segment 1506. To minimize the number of guard bands, the number of segments should be minimized.

In this example, the IEEE 802.16m-enabled BS transmits/receives on multiple carriers each with the corresponding FFT size of each segment.

An IEEE 802.16m sub-channel can be defined within each segment illustrated in Figure 14A. An MS can be assigned a sub-channel resource in segments that have bandwidths equal to or smaller than the MS bandwidth capability.

For example, a 5 MHz MS can be assigned to either of the 5 MHz segments 1502, 1504 by the BS signaling the center frequency of the corresponding segment in a slower fashion (through unicast control signaling after network entry). A 10 MHz MS can be assigned to either the two 5 MHz segments 1502, 1504 or the 10 MHz segment 1506 by the BS signaling the center frequency of the two 5 MHz segments 1502, 1504 or the 10 MHz segment 1506 in a slower fashion (through unicast control signaling after network entry). A 20 MHz MS can be assigned to any of the 5 MHz segments 1502, 1504 and 10 MHz segment 1506 dynamically since the center frequency does not change.

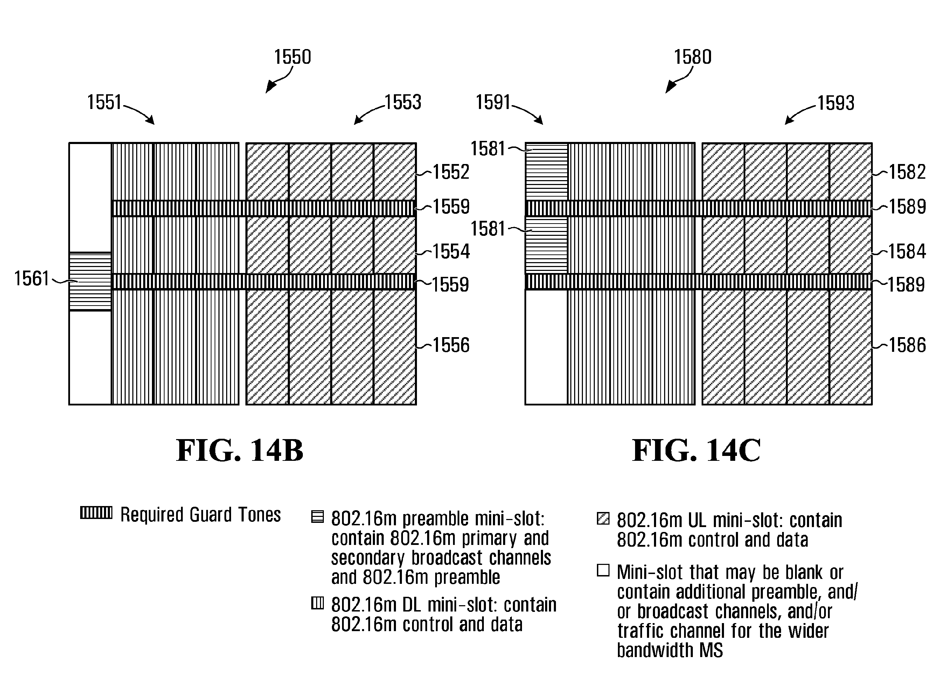

Figure 14B shows a representative frame structure of the multi-band scenario 1500 illustrated in Figure 14A showing a first option of where the preamble mini-slot could be located. Multi-band scenario 1550 is comprised of DL mini-slots 1551 and UL mini-slots 1553.

Segments 1552 and 1554 comprise 5 MHz segments. Segment 1556 comprises a 10 MHz segment. Required guard bands 1559 separate the segments.

In this first option, preamble mini-slot 1561 is located at the center of the RF frequency to minimize detection time. The bandwidth where the preamble mini-slot is transmitted should be the minimum of the bandwidth capacity of the IEEE 802.16m-enabled MSs.

Figure 14C shows further details of the multi-band scenario 1500 illustrated in Figure 14A showing a second option of where the preamble mini-slot could be located. Multi-band scenario 1580 is comprised of DL mini-slots 1591 and UL mini-slots 1593.

Segments 1582 and 1584 comprise 5 MHz segments. Segment 1586 comprises a 10 MHz segment. Required guard bands 1589 separate the segments.

In this second option, preamble mini-slot 1581 is located at one or more segments (two segments are illustrated in Figure 14C). In this case, the MS has to search the preamble over multiple possible choices of segments, which can be a preferred option to align with the legacy support mode where the preamble is located at one or more of the segments.

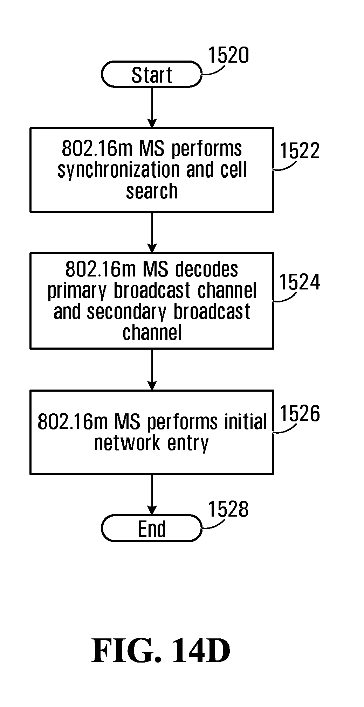

Figure 14D is a flowchart showing the steps for initial access for an IEEE 802.16m-enabled MS using the multi-band scenario of Figure 14B.

At step 1520, the process begins.

At step 1522, an IEEE 802.16m-enabled MS detects the common-sync and cell-specific preamble on the IEEE 802.16m preamble mini-slot on one of the segments and performs synchronization and cell search.

At step 1524, the IEEE 802.16m-enabled MS decodes the primary broadcast channel and the secondary broadcast control channel on the IEEE 802.16m preamble mini-slot. The information in these channels includes system bandwidth, bandwidth segments, reserved tones, and guard tones.

At step 1526, an MS performs initial network entry on one of the segments based on the MS bandwidth capability as well as the recommended initial network entry segment(s) indicated by the BS in the primary/secondary broadcast channel. Note that the BS can designate one or more segments as the initial network entry segments.

At step 1528, the process ends.

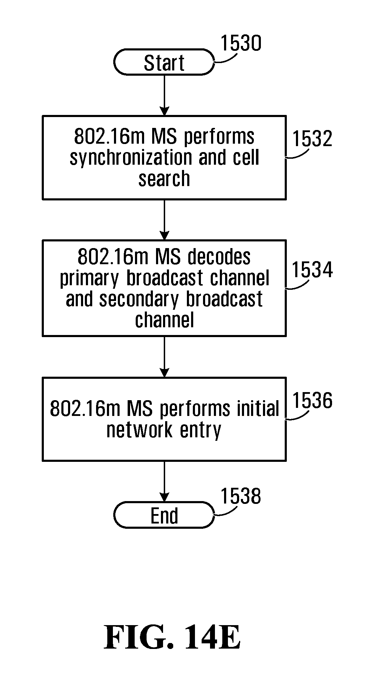

Figure 14E is a flowchart showing the steps for initial access for an IEEE 802.16m-enabled MS using the multi-band scenario of Figure 14C.

At step 1530, the process begins.

At step 1532, an IEEE 802.16m-enabled MS detects the common-sync and cell-specific preamble on the IEEE 802.16m preamble mini-slot on one of the segments and performs synchronization and cell search.

At step 1534, the IEEE 802.16m-enabled MS decodes the primary broadcast channel and the secondary broadcast control channel on the IEEE 802.16m preamble mini-slot. The information in these channels includes system bandwidth, bandwidth segments, reserved tones, and guard tones.

At step 1536, an MS performs initial network entry on one of the segments based on the MS bandwidth capability as well as the recommended initial network entry segment(s) indicated by the BS in the primary/secondary broadcast channel. Note that the BS can designate one or more segments as the initial network entry segments. Those segments designated for network entry can be the same or different than the segments containing the preamble mini-slot.

At step 1538, the process ends.

Figures 11A to 14E and corresponding description above may enable a person of ordinary skill in the art to realize the following advantageous functionality.

A system bandwidth can be divided into multiple segments with each segment having the same or different bandwidths. Each segment can support one or multiple systems or OFDMA transmission formats. A system, transmission format or time-frequency resource definition can span one or more segments.

A base station can simultaneously support different types of systems or OFDMA transmission formats on different segments. The base station can transmit/receive in single carrier fashion, that is one center frequency and one FFT across multiple segments or in multi-carrier fashion, that is multiple center frequencies and FFTs across multiple segments.

A mobile station can transmit/receive in single carrier fashion, that is one center frequency and one FFT across multiple segments or in multi-carrier fashion, that is multiple center frequencies and FFTs across multiple segments.

A mobile station can transmit/receive on one or multiple segments using different center frequencies and FFT sizes from the base station.

A mobile station can be semi-statically or dynamically allocated to one or multiple segments after network entry.

Guard bands or tones between segments can be semi-statically or dynamically included or excluded.

One or more segments contain the universal synchronization channels and system parameter broadcast channels shared by multiple systems. Additional system-specific synchronization channels and system parameter broadcast channels can be located in the same or different sets of segments.

The universal synchronization channels and system parameter broadcast channels can be located on the center frequency of the entire band, with a predefined bandwidth.

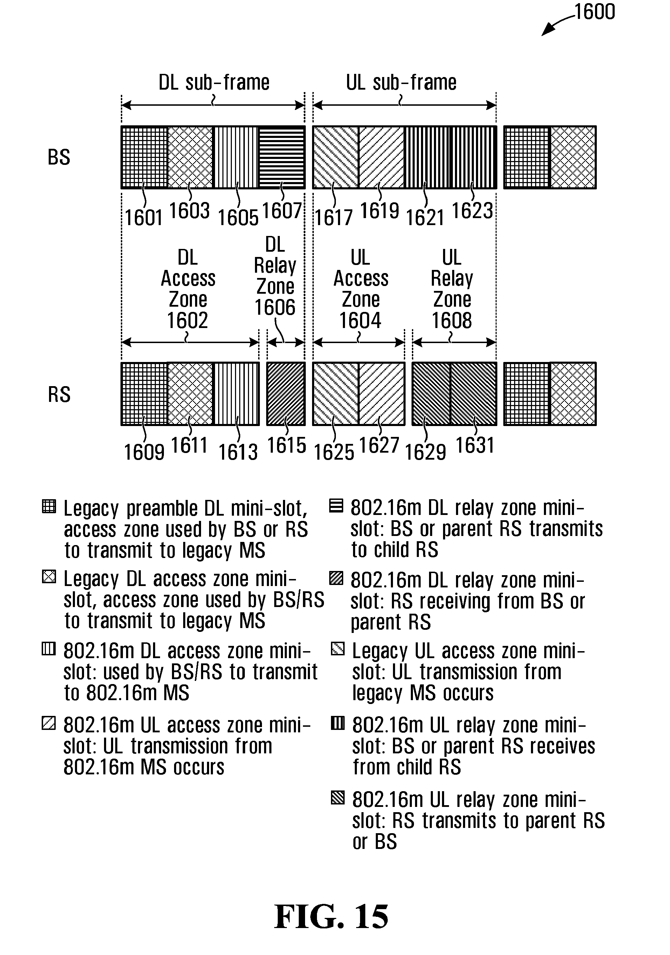

Figure 15 is a block diagram showing a first example of a frame structure to accomplish multi-hop relay, for TDD, provided in accordance with one embodiment. This first example illustrates separate DL and UL access zones 1602, 1604 and relay zones 1606, 1608. An access zone is used to enable a BS/RS to communicate with an MS. A relay zone is used to enable a BS/RS to communicate with an RS.

In the DL sub-frame 1600 at the BS, one or multiple DL mini-slots 1601, 1603, 1605 are used for the DL access zone, and one or multiple DL mini-slots 1607 are used for DL relay zone. In the DL sub-frame 1600 at the RS, one or multiple DL mini-slots 1609, 1611, 1613 are used for the DL access zone, and one or multiple DL mini-slots 1615 are used for the DL relay zone.

In the UL sub-frame at the BS, one or multiple UL mini-slots 1617, 1619 are used for the UL access zone and one or multiple UL mini-slots 1621, 1623 are used for UL relay zone. In the UL sub-frame at the RS, one or multiple UL mini-slots 1625, 1627 are used for the UL access zone and one or multiple UL mini-slots 1629, 1631 are used for the UL relay zone.

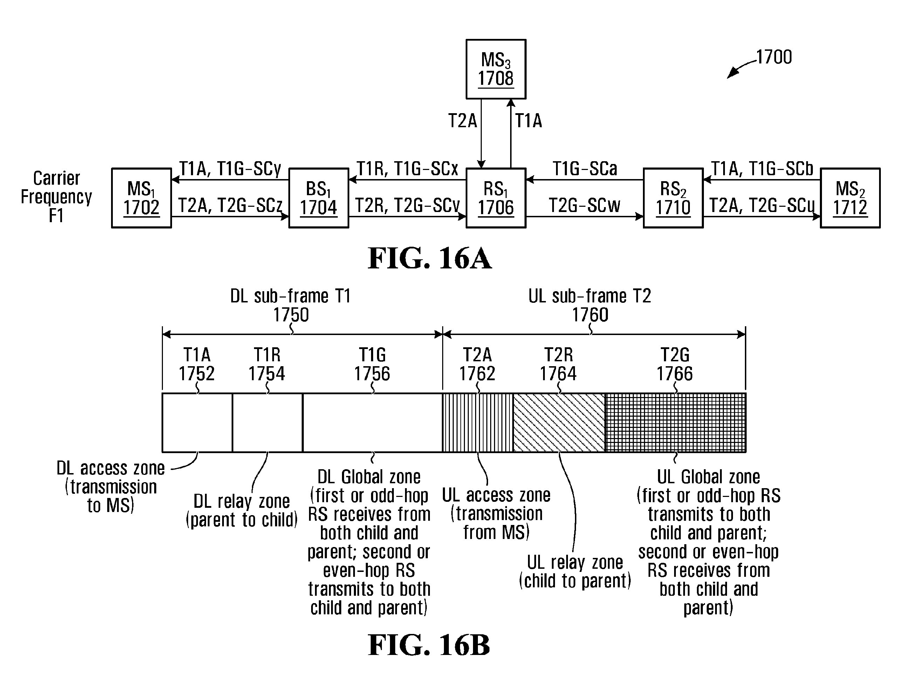

Figure 16A is a block diagram of a representative example of a wireless communication network illustrating a second embodiment in TDD supporting multi-hop relay. In Figure 16A, the concept of a global zone is introduced.

Global transmission zones are defined for simultaneous transmission to parent node and child node. Global reception zones are defined for simultaneous reception from parent node and child node.

MSs may use global zones for transmission/reception to an access node (e.g. an RS or BS). But a given global zone may be used either for reception or transmission by all the mobiles to avoid interference. Therefore, global zones may be defined within the DL sub-frame or the UL sub-frame so that the mobiles are allowed only to use them for UL or DL transmissions. These global zones may be configured to be used for MS communication in either odd-hop nodes or even-hop nodes. Two DL global zones can be configured, one for odd-hop RSs to MSs transmission and the other for even-hop RSs to MS communications. Similarly two global zones may be configured in the UL sub-frame.

Within each global zone, the transmissions to/from the parent and child nodes use the same set of compatible channelization structures in order to overlay the resources allocated to the parent and child nodes.

For the case of a dedicated pilot, one solution is to define the same tile structure for parent and child to transmit/receive.

For the case of common pilot, one solution is to define an orthogonal common pilot structure for parent and child.

Transmission on global zones can be scheduled by one or more nodes involved in the global zone transmission/reception, and/or a parent node of those nodes involved in transmission/reception, and/or by the base station under a centralized scheduler.

In addition to global zones, separate non-global zones can be configured, such as an access zone that can be configured for parent RS/BS to MS communication, and relay zone that can be configured for parent RS/BS to child RS communication.

In addition to data communication between BS, MS and RS, global zones can also be used for transmission/reception of signaling information among different nodes for network self-configuration and self-organization operation.

In the example of Figure 16A, wireless communication network 1700 is comprised of MS₁ 1702, BS₁ 1704, RS₁ 1706, MS₃ 1708, RS₂ 1710, and MS₂ 1712. In Figure 16A, T1A refers to a DL access zone for transmission to an MS, T1R refers to a DL relay zone (for communications from parent to child), T1G refers to a DL global zone (where a first or odd-hop RS receives a communication from both child and parent; and a second or even-hop RS transmits to both child and parent, T2A refers to a UL access zone (for transmission from an MS), T2R refers to a UL relay zone (for communications from child to parent), and T2G refers to a UL global zone (where a first or odd-hop RS transmits to both child and parent; and a second or even-hop RS receives from both child and parent). The designation SC refers to a subchannel.

Figure 16B is a block diagram illustrating DL and UL sub-frames 1750, 1760 for the second example shown in Figure 16A. DL sub-frame T1 1750 is comprised of zone T1A 1752, zone T1R 1754, and zone T1G 1756. UL sub-frame 1760 is comprised of zone T2A 1762, zone T2R 1764, and zone T2G 1766.

In this second example technique, a global zone is defined for a node (e.g., an RS) to simultaneously transmit to its parent node (e.g. a BS or a parent RS) and child node (e.g., a child RS or MS). Another global zone is defined for a node (e.g., an RS) to simultaneously receive from its parent node (e.g. a BS or a parent RS) and child node (e.g., a child RS or MS).

The different zones shown in Figures 16A and 16B are:
DL Access Zone (T1A): This is the BS/RS to MS DL transmission zone in the DL sub-frame at time slot T1.
DL Relay Zone (T1R): This is the BS/RS to RS DL relay zone in the DL sub-frame at time slot T1, which can be used exclusively for transmission from a parent BS/RS to a child RS.
Global Zone in DL sub-frame (T1G): This is a common zone within the DL sub-frame at time slot T1, in which an RS can transmit/receive data to both parent BS/RS and child RS. This zone also can be used by an access RS/BS to send data to an MS.
UL Access Zone (T2A): This is the MS to BS/RS UL transmission zone in the UL sub-frame at time slot T2.
UL Relay Zone (T2R): This is the RS to BS/RS UL relay zone in the UL sub-frame at time slot T2, which can be used exclusively for transmission from a child RS to a BS/RS.
UL Global Zone in UL sub-frame (T2G): This is the common zone within the UL sub-frame at time slot T2, in which an RS can transmit/receive data to both parent RS/BS and child RS. This zone also can be used by an MS to transmit data to an access RS/BS.

There are two options for resource multiplexing in the global zones:
Option 1: Different OFDMA time/frequency (or subchannel) resource is assigned to different simultaneous transmissions to/from different nodes. This option does not improve resource multiplexing but will improve latency. In Figure 16A, T1G-SCx and T1G-SCy describes different subchannel resource X and Y in the global zone at time T1.
Option 2: the same OFDMA time/frequency (or subchannel) resource is assigned to different simultaneous transmissions to/from multiple nodes. Interference avoidance or removal is used to separate the transmissions. This option provides resource multiplexing gain in addition to latency improvement. In this case, in FIG. 16A, SCx and SCy have the same time/frequency resource, SCa and SCb have the same time/frequency resource, SCz and SCv have the same time/frequency resource, and SCw and SCu have the same time/frequency resource. In one embodiment, SCx, SCy, SCa and SCb all have the same time/frequency resource. SCz, SCv, SCw and SCu all have the same time/frequency resource.

In this second example shown in Figures 16A and 16B, the BS and the RS in the second hop can communicate with the MS in the global zones but the RS in the first hop can only use the access zones T1A and T2A to communicate with the MSs. Alternatively, a global zone can also be configured such that the first hop RS can use global zones to communicate with its MSs but the BS and the second hop RSs can only use access zones T1A and T2A to communicate with their MSs. Relay zones T1R and T2R are used for the BS to transmit to and receive from the RS respectively. Other relay zones may be defined for the first hop RS to transmit to and receive from the second hop RS.

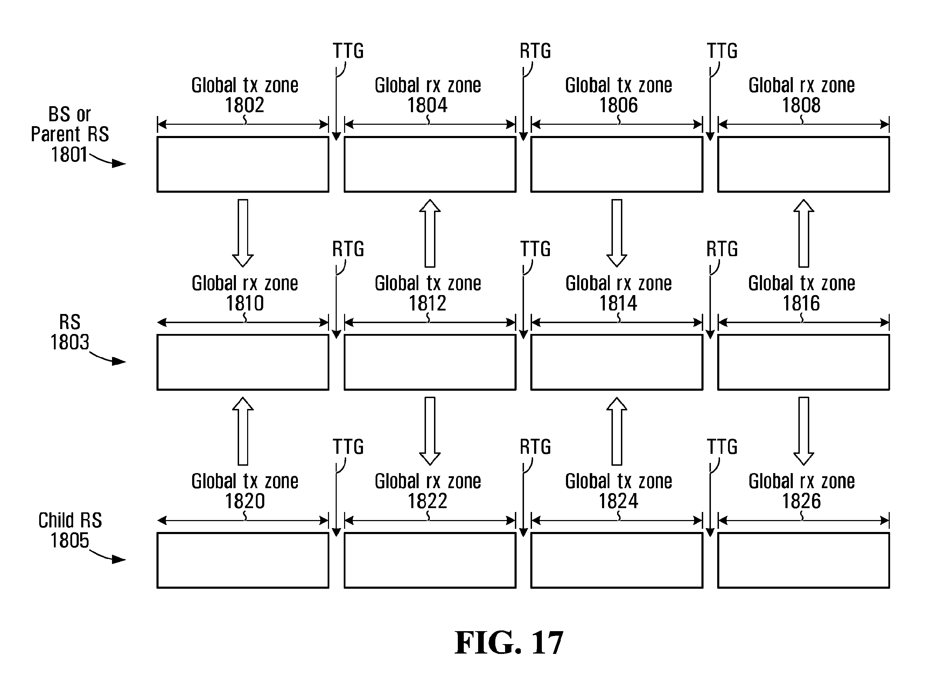

Figure 17 is a block diagram showing further details of the second embodiment for multi-hop relay. As illustrated, multiple global zones can be defined where there are multiple RSs. In the example of Figure 17, a global zone is defined for each RS (in this case two) for transmission and another global zone is defined for each RS (in this case two) for reception. Thus global transmit zones 1802, 1806 are defined at a BS 1801 (or parent RS), along with global receive zones 1806, 1808. Similarly, global transmit zones 1812, 1816 are defined at an RS 1803, along with global receive zones 1810, 1814. Finally, at child RS 1805, global transmit zones 1820, 1824 are defined, along with global receive zones 1822, 1826. In all cases in this example, TTGs and RTGs are employed to prevent downlink and uplink collisions.

Within each global zone, the transmissions to/from the parent and child nodes use the same set of compatible channelization structures in order to overlay the resource allocated to the parent and child nodes.

MSs may receive or transmit in a global zone from their access nodes. However, in a given global zone, either all the MSs transmit or all the MSs receive. This may be achieved by assigning the global zones within the downlink sub-frame or uplink sub-frame. When the global zone is in the downlink sub-frame, MSs can only receive (from their access nodes) and when it is in the uplink sub-frame, MSs can only transmit.

In addition to global zones, transmission to/from the child MS can be performed on separate non-global zones.

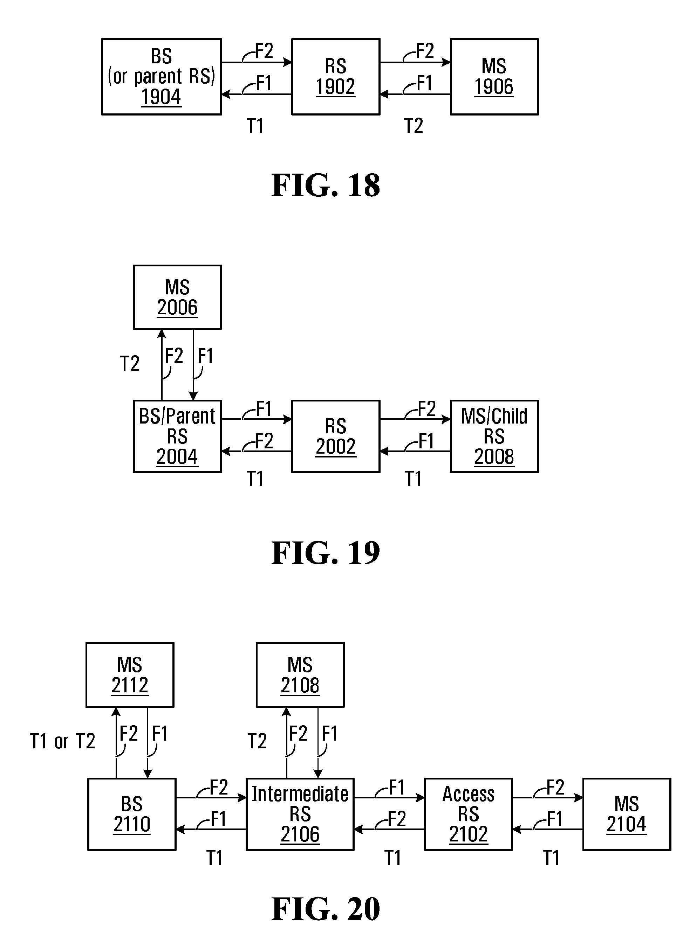

Figure 18 is a block diagram showing further details of a third embodiment for multi-hop relay, but this time for FDD. The technique illustrated includes a first Two Hops aspect.

Communications between an RS 1902 with its parent node and with its child node occur at different time slots T1 and T2.

At time T1, RS 1902 communicates with its parent node BS 1904 (or parent RS) using frequency F2 on DL and frequency F1 on UL.

At time T2, the RS communicates with its child node (e.g. MS or child RS) using frequency F2 on DL and frequency F1 on UL

BS 1904 can communicate with MS 1906 on time T1 or T2. T2 is preferred for better reuse of OFDMA resources that are used by RS 1902 to communicate with MS 1906.

Figure 19 is a block diagram showing further details of a fourth embodiment for multi-hop relay, also for FDD. The technique illustrated includes a second Two Hops aspect.

At time T1, RS 2002 can simultaneously receive on the UL on F1 from MS/child RS 2008 and receive on the DL on F1 from BS/parent RS 2004 on the global zone.

At time T1, RS 2002 can simultaneously transmit on the DL to MS 2008 on F2 and transmit on the UL to BS/parent RS 2004 on F2 on the global zone.

At time T2, BS/parent RS 2004 transmits/receives to/from MS 2006 on F2 for DL and F1 for UL.

At time T1, there are two options for resource multiplexing in the global zones:
Option 1: different OFDMA time/frequency resources are assigned to different transmissions to/from different nodes. This option does not improve resource multiplexing but will improve latency.
Option 2: the same OFDMA time/frequency resource is assigned to multiple transmissions to/from multiple nodes. Interference cancellation with or without a directional antenna can be used to separate the transmissions. This option provides resource multiplexing gain in addition to latency improvement.

Figure 20 is a block diagram showing further details of a fifth embodiment for multi-hop relay, also for FDD. The technique illustrated includes a more than Two Hops aspect.

At a particular time slot, an RS transmits simultaneously to its parent node and child node on the same carrier frequency. An RS receives simultaneously from its parent node and child node on another carrier frequency. An RS and its next hop RS (parent or child) use alternate carrier frequency for transmission and reception. This is explained in the example below.

At time T1, intermediate RS 2106 uses F1 for transmission to its child and parent nodes (i.e. BS 2110 and access RS 2102) on a global zone and uses F2 for reception from its child and parent nodes on a global zone. Its next hop RS, i.e. access RS 2102, uses F2 for transmission to its child and parent nodes (i.e. intermediate RS 2106 and MS 2104) on a global zone and uses F1 for reception from its child and parent nodes on a global zone.

BS 2110 can transmit/receive to/from MS 2112 on T1 or T2. F2 is for DL and F1 is for UL. T2 is preferred for better reuse at the OFDMA resource.

At time T2, intermediate RS 2106 transmits/receives to/from MS 2108 on F2 for DL and F1 for UL.

At time T1, there are two options for resource multiplexing in the global zones:
Option 1: a different OFDMA time/frequency resource is assigned to different transmissions to/from different nodes. This option does not improve resource multiplexing but will improve latency.
Option 2: the same OFDMA time/frequency resource is assigned to multiple transmissions to/from multiple nodes. Interference cancellation with or without a directional antenna can be used to separate the transmissions. This option provides resource multiplexing gain in addition to latency improvement.

The same frame structure same as that defined for multi-hop relay can be used to support network coding. Global zones as described above can be defined for a network node to simultaneously multicast the transmission to both parent node(s) and child node(s), as well as receive simultaneous transmissions from parent node(s) and child node(s).

Figures 15 to 20 and the corresponding descriptions above may enable a person of ordinary skill in the art to realize the following advantageous functionality.

A node can transmit signals to its parent node and child node at the same time on the same RF carrier. A node can receive signals from its parent node and child node at the same time on the same RF carrier.

A node can transmit signals to its parent node and child node at the same time on the same RF carrier on global time-frequency resource zones. A node can receive signals to its parent node and child node at the same time on the same RF carrier on global time-frequency resource zones.

A set of orthogonal time-frequency sub-channels can be defined in a global time-frequency resource zone. The set of sub-channels is shared by the transmission to parent node and child node or reception from parent node and child node.

Global time-frequency resource zones may be configured within the DL sub-frame and/or UL sub-frame so that different MSs may not use the same global zone for DL and UL transmissions that can lead to interference issues. On a global time-frequency zone, either odd-hop or even-hop access nodes may use the zone for transmission to (or reception from) an MS. Two global time/frequency resource zones, one configured for odd-hop RS to MS communication and one configured for even-hop RS to MS communications may be configured for the DL sub-frame. Similarly two global zones may be configured for the uplink.

A node receives from (or transmits to) its parent node and child node using the same time-frequency resource. Data can be recovered using interference avoidance or interference removal.

Global time-frequency resource zones are defined for signaling exchanges between multiple nodes (BS, and/or RS, and/or MS) for self-configuration and self-organization operation.

What has been described is merely illustrative of the application of the principles of the invention. Other arrangements and methods can be implemented by those skilled in the art without departing from the spirit and scope of the present invention.

## Claims

1. A method comprising
providing a frame, the frame including a downlink sub-frame and an uplink sub-frame, portions of the downlink sub-frame and uplink sub-frame being allocated for communication with a mobile station configured to operate utilizing a legacy wireless standard (legacy IEEE 802.16 standard), and portions of the downlink sub-frame and uplink sub-frame being allocated for communication with a mobile station configured to operate utilizing the current wireless standard (IEEE 802.16m standard); and
using the frame to wirelessly communicate with a mobile station in at least one of the uplink and downlink directions.

2. The method of claim 1 wherein the downlink sub-frame and uplink sub-frame are separated by a gap, the gap being adjacent to the portions of the downlink sub-frame and uplink sub-frame being allocated for communication with a mobile station configured to operate utilizing a legacy wireless standard (legacy IEEE 802.16 standard).

3. The method of claim 2 further comprising
generating a superframe comprised of four frames, each frame separated from each other by a guard band.

4. The method of any one of claims 1 to 3 wherein the downlink sub-frame and uplink sub-frame each comprise a plurality of mini-slots, the first mini-slot in the downlink sub-frame being allocated for communication with a mobile station configured to operate utilizing a legacy wireless standard (legacy IEEE 802.16 standard).

5. The method of claim 4 wherein the first mini-slot in the uplink sub-frame is allocated for communication with a mobile station configured to operate utilizing a legacy wireless standard (legacy IEEE 802.16 standard).

6. The method of claim 3 further comprising
defining a common-sync channel at one symbol prior to a boundary of the superframe.

7. The method of any one of claims 1 to 6 including a base station, and at least one relay station wherein portions of the downlink sub-frame and uplink sub-frame are allocated as relay zones for wireless communication between the base station and the relay station.

8. The method of claim 7 wherein a portion of the downlink sub-frame is allocated as a global receive zone for wireless communications which the relay station received from a parent/child to that relay station and/or wherein a portion of the downlink sub-frame is allocated as a global transmit zone for wireless communications which the relay station transmits to a parent/child of that relay station and/or wherein a portion of the uplink sub-frame is allocated as a global transmit zone for wireless communications which the relay station transmits to a parent/child of that relay station.

9. An apparatus for wireless communication, comprising at least one processor configured to perform the method of any one of claims 1 to 8.

10. A computer program product comprising a computer-readable medium storing instructions which, when executed by a processor perform the method of any one of claims 1 to 8.

11. A method of operating a wireless communications network having multiple mobile stations and a serving base station, the multiple mobile stations including a first mobile station and a second mobile station, the method comprising:
dividing system bandwidth into a plurality of bandwidth segments, one for each mobile station, the bandwidth segment associated with the first mobile station being configured to operate utilizing the wireless standard (IEEE 802.16m standard).

12. The method of claim 11 further wherein the bandwidth segment associated with the second mobile station is configured to operate utilizing a legacy wireless standard (legacy IEEE 802.16 standard).

13. The method of claim 12 further comprising a third mobile station, the bandwidth segment associated with the third mobile station is configured to operate utilizing both a legacy wireless standard (legacy IEEE 802.16 standard) and the current wireless standard (IEEE 802.16m standard).

14. The method of any one of claims 11 to 13 wherein the frame structure for the bandwidth segment associated with the first segment includes a downlink sub-frame and an uplink sub-frame, portions of the downlink sub-frame and uplink sub-frame being allocated for communication with a mobile station configured to operate utilizing a legacy wireless standard (legacy IEEE 802.16 standard), and portions of the downlink sub-frame and uplink sub-frame being allocated for communication with a mobile station configured to operate utilizing the wireless standard (IEEE 802.16m standard).

15. The method of claim 14 wherein the downlink sub-frame and uplink sub-frame each comprise a plurality of mini-slots, the first mini-slot in the downlink sub-frame being allocated for communication with a mobile station configured to operate utilizing a legacy wireless standard (legacy IEEE 802.16 standard).
